# EUROPEAN PATENT SPECIFICATION

(11) **EP 1 805 273 B1**
(45) Date of publication and mention of the grant of the patent: **21.04.2010**
(21) Application number: 05819663.5
(22) Date of filing: 26.10.2005
(51) Int. Cl.: C09D 175/14, C08G 18/08, C08G 18/12, C08G 18/28, C08G 18/36, C08G 18/42

(54) **WATER-BORNE DISPERSIONS OF OIL MODIFIED URETHANE POLYMERS**
WASSERGETRAGENE DISPERSIONEN ÖL-MODIFIZIERTER URETHANPOLYMERE
DISPERSIONS A L'EAU DE POLYMERES URETHANE MODIFIES A L'HUILE

(30) Priority: 26.10.2004 US 622254 P
(43) Date of publication of application: 11.07.2007
(73) Proprietor: Lubrizol Advanced Materials, Inc., Cleveland, OH 44141-3247 (US)
(72) Inventor: PAJERSKI, Anthony D., Broadview Heights, Ohio 44147 (US)
(74) Representative: von Kreisler Selting Werner
(86) International application number: PCT/US2005/038983
(87) International publication number: WO 2006/047746

(56) References cited:
- US-A- 4 983 662
- US-A- 6 166 150
- PATENT ABSTRACTS OF JAPAN vol. 1995, no. 09, 31 October 1995 (1995-10-31) & JP 07 166130 A (DAINIPPON INK & CHEM INC), 27 June 1995 (1995-06-27)

## Description

### FIELD OF THE INVENTION

The present invention relates to oil-modified urethane (OMU) polymers and to aqueous dispersions thereof. In particular, the invention relates to air curable water-borne or aqueous dispersions of urethane polymers suitable for use in coating compositions for application to various substrates such as wood, paper, plastic or metal.

### BACKGROUND OF THE INVENTION

Urethane polymers have found widespread use in coatings for a variety of substrates such as plastics, wood, metal and textiles. It is known in the industry that urethane based coatings exhibit excellent properties such as abrasion and chemical resistance, toughness, elasticity, and their ability to cure rapidly. Oil-modified, solvent-based urethane polymer coating compositions have been utilized as clear protective finishes on wood flooring. When applied, the solvent evaporates at ambient temperature and the polymer coating is crosslinked by air oxidation through ethylenic unsaturated groups that are pendant from the polyurethane backbone. The pendant unsaturation is provided by unsaturated fatty acid residues that have been reacted into the polymer backbone. Rising health and environmental concerns over volatile organic compound (VOC) emission from solvent based paints and coatings has resulted in strict regulation of VOC emitted from paints and coatings after application.

In order to comply with such strict environmental regulations much attention has been directed toward the development of water-borne polyurethane coatings which employ lesser amounts of organic solvents than traditional solvent-based coatings. For water dispersability, it is known to polymerize a dispersing diol containing ionizable groups such as a free carboxylic acid moiety into the urethane prepolymer backbone. Typically, isocyanate terminated water dispersible prepolymers are made by reacting: (1) a low molecular weight dihydroxy alkanoic acid such as dimethylol propanoic acid (DMPA); (2) a polyol that contains a pendant unsaturated fatty acid ester group(s); and (3) a diisocyanate. The prepolymer is neutralized, dispersed into water and chain extended with a multifunctional active hydrogen containing compound, such as an amine or a thiol containing compound, to produce a fully reacted polyurethane dispersion. The prepolymer is usually made with low molecular weight components in the presence of some amount of solvent to facilitate the reaction and to control the viscosity of the prepolymer product. The solvent of choice has been N-methyl pyrolidinone (NMP) which is typically left in the dispersion following the chain extension step.

The substitution of water-borne polyurethane dispersions for solvent-based polyurethanes in various coating applications is gaining wide acceptance in the industry. However, water-borne polyurethanes still suffer shortcomings in that the water-based dispersions generally have lower solids content due to the use of relatively high levels of NMP co-solvent to solubilize DMPA which is a high melting solid material with limited solubility in polyols. Consequently, present water-borne polyurethane dispersion compositions will not meet proposed VOC targets of 150 g/L. In addition, the use of a low molecular weight dihydroxy alkanoic acid such as DMPA increases the minimum film formation temperature (MFFT) for coatings utilizing such acids due to the necessity of increasing the hard segment content of the polymer.
JP-A-07-166130 discloses a dispersion containing a specific water-based urethanized alkyd resin as a film-forming component, having excellent dispersibillity in water and long-term storage stability, giving a coating film having high gloss and building feeling and having extremely high practicability. This dispersion contains, as a film-forming component, a urethanized alkyd resin obtained by the reaction of (A) a polyol compound composed mainly of an unsaturated fatty acid ester polyol (preferably transisterification product of pentaerythritol and linseed oil) with (B) an organic diisocyanate compound and (C) a dialkylinonohydroxyalkanoic acid.

Given the interest in providing environmentally friendly urethane-based coatings, there is a need for development of urethane polymers that can be utilized to make clear, stable compositions containing water as the as the principle carrier or dispersing solvent and that have higher solids content, lower VOC levels, fast curing rates, and that have a good balance of properties such as hardness, mar resistance, and flexibility when in the cured state.

According to a general aspect of the invention, there is provided a water dispersible OMU urethane polymer that is formed from a urethane prepolymer that comprises: (a) pendant self-crosslinkable functional groups, (b) pendant water dispersability enhancing groups, and (c) a reactive film forming diluent.

### DETAILED DESCRIPTION OF THE INVENTION

The urethane prepolymer is prepared by reacting (a) at least one organic polyisocyanate; (b) an isocyanate reactive oil modified polyol component having olefinic unsaturation; (c) an isocyanate reactive polymeric polyol component containing pendant anionic functional groups; (d) a reactive diluent component containing at least two ethylenically unsaturated double bonds; and optionally an isocyanate reactive component selected from (e) a carbonyl functional component; (f) an anionic functional alcohol component and salts thereof; (g) an alcohol component containing a polyalkyleneoxide side chain; and mixtures thereof. In addition to the foregoing reactants at least one of an isocyanate reactive component selected from (h) polyester polyols, polyether polyols, polycarbonate polyols, polyamines, low molecular weight diols, and mixtures thereof can be added to the reaction mixture.

The term "isocyanate reactive" refers to compounds that are a source of "active hydrogen atoms" that can react with isocyanate groups via the following reaction:

-NCO + H-X → -NH-C(O)-X

Active hydrogen atoms refers to hydrogens which, because of their position in the molecule, exhibit activity according to the Zerewitinoff test. Active hydrogen includes hydrogen atoms attached to oxygen, nitrogen, or sulfur, and useful compounds will include those having at least two of these groups (in any combination) -OH, -SH, -NH- and -NH₂. The moieties attached to each group can be aliphatic, aromatic, cycloaliphatic which can contain ester, ether, keto, amine, and urethane linkages, among other linkage types.

The prepolymer subsequently is (1) optionally neutralized by reaction with at least one neutralizing agent, (2) dispersed in water optionally containing at least one neutralizing agent in lieu of step (1), and then (3) chain extended by reaction with at least one of water, inorganic or organic polyamines having an average of 2 or more primary and/or secondary amine groups, or combinations thereof to give a water-borne, air-curable OMU polyurethane dispersion. The polyurethane dispersion can optionally be blended with suitable curing agents or the prepolymer can be modified to contain suitable curing agent groups or both such that coatings made from such dispersions when applied to a substrate can be induced to produce a durable self-crosslinked coating. In one aspect of the invention, the process is conducted in the substantial absence of VOC emitting organic solvents. In another aspect of the invention, the process is conducted in the complete absence of a VOC emitting organic solvent. The foregoing aspects of the invention are accomplished by conducting the urethane prepolymer synthesis in the presence of a reactive diluent(s).

### Polyisocyanates

Suitable polyisocyanates useful in prepolymer formation have an average of about two or more isocyanate groups. In another embodiment the polyisocyanate can have an average of about two to about four isocyanate groups and include aliphatic, cycloaliphatic, araliphatic, and aromatic polyisocyanates, used alone or in mixtures of two or more.

Specific examples of suitable aliphatic polyisocyanates include but are not limited to alpha, omega-alkylene diisocyanates having from 5 to 20 carbon atoms, such as hexamethylene-1,6-diisocyanate, 1,12-dodecane diisocyanate, 2,2,4-trimethyl-hexamethylene diisocyanate, 2,4,4-trimethyl-hexamethylene diisocyanate and 2-methyl-1,5-pentamethylene diisocyanate. Polyisocyanates having fewer than 5 carbon atoms can be used but are highly volatile and toxic.

Specific examples of suitable cycloaliphatic polyisocyanates include but are not limited to dicyclohexylmethane diisocyanate, (commercially available as Desmodur™ W from Bayer Corporation), isophorone diisocyanate, 1,4-cyclohexane diisocyanate and 1,3-bis-(isocyanatomethyl) cyclohexane.

Specific examples of suitable araliphatic polyisocyanates include but are not limited to m-tetramethyl xylylene diisocyanate, p-tetramethyl xylylene diisocyanate, 1,4-xylylene diisocyanate and 1,3-xylylene diisocyanate.

Examples of suitable aromatic polyisocyanates include but are not limited to methane-bis-(4-phenyt isocyanate), toluene diisocyanate, their isomers and naphthalene diisocyanate.

Mixtures of the foregoing polyisocyanate components set forth above can be employed.

### Oil Modified Polyols

Air-oxidizable, self-crosslinkable unsaturation is conveyed into the urethane prepolymer backbone via active hydrogen containing (isocyanate-reactive) unsaturated fatty acid ester polyol(s) (e.g., oil modified polyols). The resulting unsaturation in the polyurethane imparts air curable latent crosslinkability so that when a coating composition containing such a component is dried in the air (often in conjunction with a drier salt) the coating undergoes a self-crosslinking reaction, thereby improving its properties, e.g., its chemical resistance, hardness and durability. By isocyanate reactive is meant that the unsaturated fatty acid polyol contains at least two hydroxyl groups (containing active hydrogen atoms) that are available for reaction with the isocyanate groups on the polyisocyanate. The oil modified polyols employed in the invention are conventional in the art. They are generally produced by reacting a polyfunctional alcohol (polyol) with a drying oil (glyceride) or a free fatty acid. The fatty acid component(s) of the drying oils and free fatty acids are characterized by containing at least one olefinic carbon-carbon double bond and can have two, three or more olefinic double bonds.

Unsaturated fatty acid ester polyols also can be obtained by reacting an unsaturated fatty acid with an epoxy group containing compound.

In one aspect of the invention the polyfunctional alcohols which can be used to prepare the oil modified polyols generally contain from 2 to 12 carbon atoms. In another aspect, the polyfunctional alcohols contain from 3 to 6 carbon atoms. Examples of polyfunctional alcohols which can be used include but are not limited to ethylene glycol, propylene glycol, trimethylene glycol, diethylene glycol, 1,2-butanediol, 1,3-butanediol, 1,4-butanediol, 2,3-butanediol, neopentyl glycol, triethylene glycol, 1,6-hexanediol, dipropylene glycol, tetraethylene glycol, 2,2-dimethyl-3-hydroxypropyl 2,2-dimethyl-3-hydroxypropionate, glycerine, 1,1,1-trimethylolethane, 1,1,1-trimethytotpropane, erythritol, pentaerythritol, dipentaerythritol, sorbitol, mannitol, and similar polyols. Mixtures of such polyfunctional alcohols can be used. In one aspect of the invention the average functionality of the polyfunctional alcohol can be in the range of from 2.5 to 4 hydroxyl groups per molecule. In one aspect of the invention the average functionality of the polyfunctional alcohol is 3 hydroxyl groups per molecule.

In another aspect of the invention, polyfunctional acids and acid anhydrides can be reacted with polyfunctional alcohols to obtain polyester polyols for use as a polyfunctional alcohol. Such acids and anhydrides useful in this aspect of the invention generally contain from 4 to 36 carbon atoms, and in another aspect contain from 4 to 12 carbon atoms. In a further aspect, such polyfunctional acids or acid anhydrides contain from 6 to 8 carbon atoms. Generally, the polyfunctional acids or acid anhydrides are aliphatic or aromatic polyfunctional acids or acid anhydrides. Examples of polyfunctional acids which can be used include but are not limited to succinic acid, glutaric acid, adipic acid, pimelic acid, suberic acid, azelaic acid, sebacic acid, phthalic acid, isophthalic acid, terephthalic acid, tetrahydrophthalic acid, hexahydrophthalic acid, chlorendic acid, tetrachlorophthalic acid, dimer acid, trimellitic acid and tricarballylic acid. Maleic acid, fumaric acid, glutaconic acid and similar acids also can be utilized. Anhydrides of such acids, where anhydrides exist can also be used. Mixtures of polyfunctional acids, mixtures of acid anhydrides and mixtures of polyfunctional acids and acid anhydrides can be used. In one aspect of the invention, the average functionality of the polyfunctional acid is 2 carboxyl groups per molecule. Polyfunctional acids having functionality greater than 2 are generally used when the polyhydric alcohol has an average functionality of less than 3. Anhydrides are considered to have a functionality of 2 carboxyl groups per molecule.

The unsaturated fatty acids which can be utilized in the preparation of the oil modified polyols of the invention include the ethylenically unsaturated and polyunsaturated fatty acids and their esters. The fatty acids can contain from 1 to 3 olefinic double bonds or more and include conjugated and non-conjugated unsaturation. It is intended that the fatty acids encompass and include all natural and synthetic positional isomers with respect to the location of the unsaturated carbon-carbon double bonds. In another aspect of the invention, the fatty acids contain two to three unsaturated double bonds. The unsaturated fatty acids that can be employed in preparing the oil modified polyol include but are not limited to those formed by the hydrolysis of any of the so called drying or semidrying oils, such as linseed oil, poppyseed oil, tung oil, dehydrated castor oil, safflower oil, sunflower oil, soybean oil, oiticica oil, perilla oil, walnut oil, tall oil, sardine oil and herring oil, which contain linoleic acid, linolenic acid, oleic acid, oleosteric acid, pinolenic eleosteric acid, licanic acid, arachidonic acid, ricinoleic acid, recinoic acid, palmitoleic acid, and the like.

Synthetically modified unsaturated fatty acids also can be employed in the preparation of the unsaturated fatty acid ester polyols of the invention. The properties of unsaturated fatty acids and their derivatives can be altered by rearrangement, i.e., isomerization, of the structure of the double bond, either with respect to the steric position or the position in the carbon chain of the molecule of the fatty acid. Isomerization of non-conjugated, polyunsaturated free fatty acids or their esters to conjugated positional isomers is well known in the art and can be effected by treating the fatty acid or its ester with catalysts, such as nickel, alkoxides, alkalis, sodium amide or amines, at elevated temperatures. Methods for synthetically modifying fatty acid unsaturation to obtain positional isomers are described in U.S.-A- 6,881,854 and 6,822,104.

In one aspect of the invention, the oil modified polyol can be provided by the esterification reaction of a polyol with a fatty acid. In another aspect, the oil modified polyol can be provided by the transesterification of a suitable drying or semi-drying oil(s) with a suitable polyol, such as, for example, pentaerythritol.

In another aspect of the invention, the drying or semi-drying oil (glyceride or triglyceride) can be converted to a monohydroxy ester or polyhydroxy ester by alcoholysis before adding the acid or acid anhydride and esterifying. Examples of polyols which may be used in the alcoholysis reaction include glycerine, 1,1,1- trimethylolethane, 1,1,1- trimethylolpropane and pentaerythritol. The average functionality of the polyol used in the alcoholysis reaction should be at least 2 hydroxyl groups per molecule. It is preferred that the average functionality be 3 hydroxyl groups per molecule. When the polyol has an average functionality significantly greater than 3, it is preferred that monocarboxylic acid be added in an amount which would reduce the average functionality to 3 hydroxyl groups per molecule. The monocarboxylic acid may be added during the alcoholysis reaction or during formation of the oil modified polyol. For example, when pentaerythritol is employed, one molar part monocarboxylic acid may be added per mole pentaerythritol to reduce the functionality of the resulting product to 3 hydroxyl groups per molecule.

In another aspect of the invention, the oil modified polyols can be prepared by reacting an epoxy containing compound with the aforementioned drying oils or fatty acids to obtain an unsaturated fatty acid functionalized polyol. The oil modified epoxy compound of this aspect of the invention can be readily prepared by reacting an epoxy compound having an epoxy functional group at each terminal end of the molecule with a stoichiometric equivalent of fatty acid. In one aspect of the invention the epoxy groups are glycidyl ether residues. The oil modified epoxy compound can be readily prepared by reacting at least one epoxy compound having terminal epoxy groups with at least one of the fatty acids set forth above, optionally in the presence of a catalyst. The modification reaction can be carried out at a temperature of from 80 to 200°C and a reaction time from 0.25 to 8 hours depending on the reaction temperature and the level of catalyst employed.

Exemplary catalysts include but are not limited to a phosphorus-based catalyst selected from salts of quaternary phosphonium compounds such as benzyltriphenyl phosphonium chloride, ethyltriphenyl phosphonium iodide, butyltriphenyl phosphonium bromide, ethyltriphenyl phosphonium chloride, and tetrabutyl phosphonium hydroxide; and tertiary phosphines such as triphenylphosphine, and tributylphosphine. In addition to the phosphorus based catalysts, tertiary and quaternary amines also can be employed as suitable catalyst. The catalysts may be employed alone or in combination.

In one aspect of the invention, an epoxy compound such as a diglycidyl ether terminated resin is reacted with an unsaturated fatty acid as shown in the reaction schematic below. The reaction occurs as the epoxy groups undergo ring-opening and esterification by reaction with drying or semi-drying oil fatty acids. The resulting product contains hydroxyl groups formed from the ring-opening of the oxirane moiety. These hydroxyl groups contain active hydrogen atoms and are co-reactive with the isocyanate groups contained in the polyisocyanate compound during prepolymer formation and allow the unsaturated fatty acid to be polymerized into the prepolymer backbone. An exemplary reaction is illustrated in the schematic below where R'C(O)OH represents any unsaturated fatty acid derived from the natural drying or semi-drying oils set forth above. In one aspect of the invention, R' is a long chain carbon moiety that can contain from 8 to 40 carbon atoms and 1 to 4 unsaturated carbon-carbon double bonds which can be conjugated or non-conjugated. 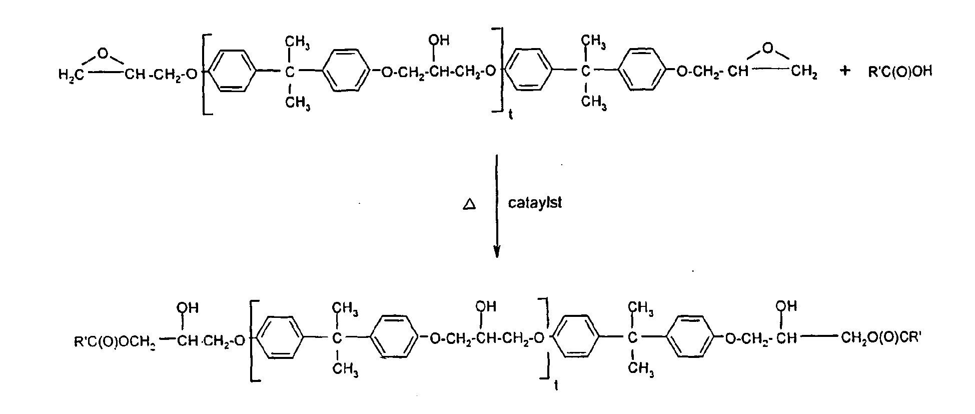 wherein t represents the extent of polymerization. In one aspect of the invention t is an integer from 0 to 18.

In one aspect of the invention epoxide compounds useful in making the oil modified epoxy component includes glycidyl ethers of any polyhydric alcohol. By way of example, the polyhydric alcohol can be selected from polyhydric phenols, aliphatic diols, cycloaliphatic diols, polyether polyols, and the like obtained by reacting the polyhydric alcohol with an epihalohydrin, e.g., epichlorohydrin.

The polyhydric phenols include but are not limited to bisphenol A (p,p'-dihydroxydiphenyl propane), resorcinol, hydroquinone, 4,4'-dihydroxybenzophenone, 4,4'-dihydroxybiphenyl and novolak resins containing more than two phenol moieties linked through methylene bridges. Epoxy resins derived from bisphenol A are commercially available under the Epon^{®} trademark from Resolution Performance Products LLC, Houston, Texas.

The aliphatic diols can be represented by the formula:

HO-(CH₂)ₘ-OH

wherein m represents an integer from 2 to 10. Representative diols include but are not limited to ethylene glycol, 1,3-propylene glycol, 1,4-butane diol, 1,5-pentane diol, 1,6-hexane diol, and the like. In addition, to the diols set forth above, neopentyl alcohol can also be utilized.

The cycloaliphatic diols can be represented by the formula: 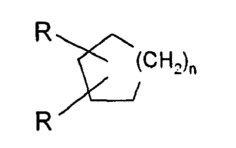 wherein R independently represents hydroxyl or hydroxy (C₁-C₅)alkyl, and n is an integer from 1 to 3. Representative cycloaliphatic diols include but are not limited to cyclohexane diol and cyclohexane dimethanol.

The polyether diols can be selected from a polyalkylene oxide represented by the formulae:

HO-(CH₂CH₂O)ₚ-H_{;}

HO-(CH₂CH(CH₃)O)_{q}-H_{;}

HO-(CH(CH₃)O)ᵣ-H

wherein p, q, and r represent an integer from 1 to 250. It is to be recognized that combinations of ethylene oxide and propylene oxide repeating units set forth above can occur in the same polyether chain in which case the sum of integers p, q, and r can range from 2 to 250.

Various diepoxy resins based on the non-aromatic polyhydric alcohols set forth above are commercially available under the Heloxy™ trademark from Resolution Performance Products, supra, and under the Erisys^{®} trademark (e.g., GE product series) sold by CVC Specialty Chemicals Inc. of Maple Shade, NJ.

A commercial oxidatively curable, natural oil modified polyol is available from Pioneer Plastics, Auburn, ME under the Piothane^{®} S-500 trademark.

The amount of unsaturated fatty acid ester polyol (or drying oil) to utilize will depend on many factors such as the degree of flexibility desired in the final coating and the nature and the amount of the other reactants used in the prepolymer formation as well as the degree and rate of air curing that is desired for the polyurethane coating. The unsaturated fatty acid ester polyol can be used in amounts of up to 50 percent by weight based on the total weight of the prepolymer components (reactants) in one aspect of the invention, and from 10 percent to 35 percent by weight in another aspect.

### Anionic Functional Polymeric Polyol

At least one isocyanate reactive polymeric polyol component that contains pendant anionic groups can be polymerized into the prepolymer backbone to impart water dispersible characteristics to the polyurethane subsequent to chain extension. The term anionic functional polymeric polyol includes anionic polyester polyols, anionic polyether polyols, and anionic polycarbonate polyols. These polyols include moieties that contain active hydrogen atoms. The anionic character in which the polyols exhibit is based on the condensation of monomers which, in addition to the functional groups required for the condensation (e.g., hydroxyl, amino, and carboxyl groups), contain a pendant anionic group. In one embodiment of the invention, the anionic group can be selected from sulfonic acid, carboxylic acid, and phosphonic acid groups, and the like, and salts thereof (e.g., sodium, potassium and ammonium), and mixtures thereof. Polyols containing anionic groups are described in U.S.-A-5,334,690.

In one aspect of the invention, the anionic functional polymeric polyol is a carboxylic acid functional polymeric polyol. The polymeric acid functional polyol of the invention include reactive hydroxyl groups (containing active hydrogen atoms) that are reactive with the isocyanate groups of the polyisocyanate component to form water dispersing segments in the prepolymer. These segments contain pendant neutralizable carboxylic acid groups situated along the backbone of the prepolymer segment and in the neutralized state aid in providing water dispersing properties to the urethane prepolymer and to the chain extended polyurethane. The use of the polymeric acid functional polyols in the invention enables the elimination or reduction of relatively low molecular weight carboxylic group containing diols such as DMPA and all the attendant disadvantages associated with such low molecular weight, high melting solids.

In one aspect of the invention, the carboxylic functional polymeric polyols of the present invention are reaction products of (1) at least one polymeric base polyol selected from polyester polyols, polyether polyols, polycarbonate polyols, polyetherester polyols, polybutadiene polyols, polyacrylic polyols, or polyolefin polyols; and (2) a polyanhydride. The polyol reactant can have a hydroxyl functionality of at least 2 in one embodiment of the invention, and 2 to 4 in another embodiment. In one embodiment of the invention each terminal end of the polymeric polyol contains a hydroxyl group. The hydroxyl number of the reactant polyol is from 30 to 1,000 in one embodiment and from 50 to 250 in another embodiment.

In one embodiment of the invention, the polymeric polyol reactant can be formed by the reaction of a diol and/or a polyol and a dicarboxylic acid. By polymeric is meant that the average molecular weight of the polyol is at least 500 in one embodiment, at least 1000 in another embodiment, and at least 3000 in still another embodiment. In another embodiment the average molecular weight can range from 500 to 5000. The diols or polyols can be any suitable aliphatic, aromatic, aliphatic/aromatic mixtures, or ether containing polyol. Suitable diols and/or polyols include but are not limited to ethylene glycol, propane diol, butane diol, hexane diol, neopentyl glycol, homo- and copolymers of polyethylene glycol and/or polypropylene glycol, and the like. Suitable dicarboxylic acids include but are not limited to adipic acid, citric acid, maleic acid, phthalic acid, isophthalic acid, terephthalic acid, trimellitic acid, succinic acid, and the anhydrides thereof. In one embodiment of the invention the polymeric polyol is a polyester polyol. Commercially available polyesters are available under the Lexore^{®} brand name from Inolex Chemical Company of Philadelphia, PA. Lexorez^{®} 1640-150 (Ave. M.W. 750) and Lexore^{®} 1400-120 (Ave. M.W. 990) polyesters are examples of specific commercial polyester products.

In one aspect of the invention polyanhydride reactants useful in the formation of the polymeric acid functional polyols contain at least two anhydride moieties. The polyanhydride reactant can be reacted with the polymeric diol or polyol reactant to form the polymeric acid functional polyol. Any polyanhydride capable of reacting with the hydroxyl moieties on the polyol and that is capable of forming an ester linkage while providing a pendant carboxyl group on the polymeric backbone is suitable for the purpose of the invention. Examples of polyanhydrides include but are not limited to cyclopentanedianhydride, 5-(2,5-dioxotetrahydrol)-3-methyl-3-cycohexnene-1,2-dianhydride, and ethylenediaminetetraacetic dianhydride, 4-(2,5-dioxotetrahydrofuran-3-yl)tetraline-1,2-dicarboxylic anhydride.

The polyanhydride (e.g., dianhydride) reacts with the hydroxyl groups on the polyol and links two polyol chains together. The carboxylic acid functional groups that are left are separated from the reactive hydroxyl groups by the length of the polymer chain. By way of non-limited example, the basic reaction scheme between a typical polyanhydride (dianhydride) and a polyol is shown below: 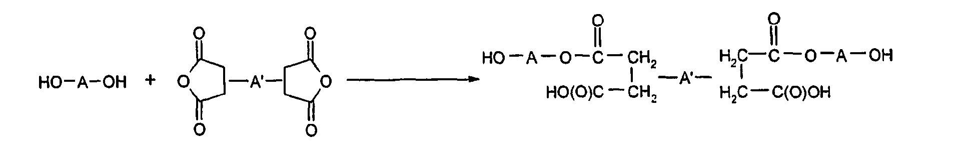 wherein A represents a polyester, polyether, polycarbonate, polyetherester, polybutadiene, polyacrylic, or a polyolefin and A' is an aliphatic or cycloaliphatic group linking the anhydride groups of the dianhydride and is covalently bonded to a non-carbonyl carbon atom(s) in each anhydride group. As one of ordinary skill in the art will recognize, the carbon atom to which A' is covalently bonded to will possess one less hydrogen atom to satisfy the valence requirements of the carbon. While the above reaction scheme is exemplified with a cycloaliphatic dianhydride structure, it should be understood that other non-cyclic non-aromatic dianhydrides can be used to form the polymeric acid functional polyol and would undergo a similar reaction. As shown above, the polyol reacts with the dianhydride to form an acid functionalized polyol in which there are reactive hydroxyl groups, and neutralizable or reactive pendant carboxylic acid groups.

The polymeric acid functional polyols have an acid value of from 10 to 150, a hydroxyl value of from 20 to 500, and a hydroxyl functionality that ranges from 1.8 to about 2.

The polymeric polyol reactant should be present in a slight stoichiometric excess of hydroxyl groups needed to react with the non-aromatic polyanhydride. The particular amounts used are dependent upon the desired functionalities of the acid functionalized polyol to be made. The amount of dianhydride needed can be calculated from the acid equivalent weight of the dianhydride which corresponds to the acid equivalent weight of the desired acid value of the acid functional polyol. In embodiment of the invention, the percentage ratios of polymeric polyol reactant to polyanhydride in the reaction product should be from 30:1 to 1:1 in one aspect, and from 20:1 to 2:1 in another aspect.

In one aspect of the invention a method for making the polymeric acid functional polyol at least one polyol including the hydroxy-terminated polyolefins and polymeric polyols noted above is reacted with a polyanhydride as described above at a temperature of from 50°C to 200°C to form an acid functional polyol. The reaction is monitored by taking samples periodically and measuring both the acid and hydroxyl numbers. The reaction is terminated when the acid functional polyol has an acid value of at least 10, preferably from 10 to 150, a hydroxyl value of at least 20, preferably from 20 to 500, and a hydroxyl functionality of at least 2. In another aspect, the reaction is terminated when the acid value is from 20 to 75, the hydroxyl value is from 50 to 150, and the hydroxyl functionality is from 2 to 4.

In accordance with another embodiment, polymeric acid functional polyols can be derived from an esterification reaction of at least one first component such as an aliphatic polycarboxylic acid (e.g., a diacid), or a polyol or mixtures of such diacids and polyols with a second component which has at least two unhindered functional groups and at least one hindered carboxylic acid functional group. The unhindered functional groups can be a carboxylic acid group, a hydroxyl group, a primary or secondary amine group, a thiol group, or another similar group capable of reacting with a carboxylic acid. The resulting polymeric acid functional polyols have an acid value of at least 10, preferably from 30 to 150, and more preferably from 30 to 80. The hydroxyl value of the acid functional polyol is at least 20, preferably from 20 to 500, and more preferably from 35 to 150. The hydroxyl functionality is at least 2, and preferably from 2 to 4.

The first component, which includes one or more polyols and/or one or more aliphatic diacids, is chosen in conjunction with the second component in order to facilitate the desired reaction and to achieve the preferred functionalities in the polymeric acid functional polyol. For example, if the second component selected has reactive (unhindered) carboxylic acid functional groups, then the first component should be at least one monomeric or polymeric polyol. Such components are reacted under conditions which allow the unhindered carboxylic acid groups on the second component to react with the hydroxyl groups on the polyol(s) and leave the hindered carboxylic acid group unreacted. In the final polymer, the hindered groups are distributed along and are pendant from the polymer backbone. As a further example, if the second component selected has reactive (unhindered) groups which are hydroxyl groups and/or some other group(s) capable of reacting with carboxylic acid, such as primary or secondary amine or thiol groups, then the first component is selected to have one or more polyol(s) and to have a reactive diacid to covalently bond the molecule containing the hindered carboxylic acid group to the polyol to form the acid functional polyol which will have distributed pendant carboxylic acid groups.

Aliphatic diacids which can be used in the esterification reaction include but are not limited to oxalic acid, malonic acid, succinic acid, glutaric acid, adipic acid, maleic acid, fumaric acid, azeleic acid, phthalic acid, isophthalic acid, terephthalic acid, their anhydrides and derivatives, and other similar diacids and dimers having the requisite diacid functionality.

The polyols useful in the esterification reaction can be monomeric or polymeric. Exemplary polymeric polyols include but are not limited to polyester polyols, polyether polyols, polyacrylic polyols, polybutadiene polyols, polycarbonate polyols, homopolymers or copolymers of polyethylene and polypropylene glycol, and other similar polymeric polyols. Exemplary monomeric polyols include ethylene glycol, 1,2-propanediol, 1,3- propanediol, glycerin, butanediol, hexanediol, neopentyl glycol, trimethylol propane and similar monomeric polyol compounds. It will be understood, that other diacids and polyols can be as long as they are capable of reacting with the unhindered groups of the second component and not reacting to any significant extent with the hindered carboxylic acid group(s) of the second component.

Examples of compounds which can be used as the second component and which have one hindered carboxylic acid group and two unhindered functional groups include but are not limited to tricarballylic acid (1,2,3-propanetricarboxylic acid), citric acid, gluconic acid, glutamic acid (alpha-amino-glutaric acid), glyceric acid, dimethylolpropionic acid, cysteine (alpha-amino-beta-thiolpropionic acid), glutamine (2-amino-4- carbamoylbutanoic acid) and similar compounds having the necessary number of hindered and unhindered groups.

In one embodiment the components be combined by reacting them in a range of weight percentage ratios of from 30:1 to 1:1, preferably from 20:1 to 4:1 of the first component to the second component. The ratio of the reactants may have to be adjusted depending upon the particular components selected to form the acid functional polyol.

In one reaction according an aspect of the present invention, the first component includes adipic acid and a polyethylene glycol having an average molecular weight of from 100 to 2,000. The first component further may also include glycerin and/or trimethylol propane. The second component is preferably either dimethylolpropionic acid, citric acid or a mixture of these two acids.

In such a reaction, the acid functional polyol would be the reaction product of from 10 to 50 weight percent of adipic acid, from 20 to 85 weight percent of polyethylene glycol, optionally from 0 to 10 weight percent, preferably 0.1 to 10 weight percent of glycerin and/or trimethylol propane, and from 2 to 25 weight percent of the second component.

In forming an acid functional polyol according to one method of the present invention, at least one first component is reacted with the second component, as described above. The reaction can be a one-shot esterification reaction at a temperature of from 100°C to 250°C to form the polymeric acid functional polyol. The reaction is monitored by taking samples periodically and measuring both the acid and hydroxyl numbers. The reaction is terminated when the acid functional polyol has an acid value of at least about 10 in one aspect of the invention, from 30 to 150 in another aspect, and from 30 to 100 in still another aspect, a hydroxyl value of at least 20 in one aspect of the invention, from 20 to 500 in another aspect, and from 35 to 150 in still another aspect, and a hydroxyl functionality of at least 2 in one aspect of the invention, and from 2 to 4 in another aspect.

Suitable polymeric acid functional polyols and methods for making same are disclosed in U.S.-A- 5,880,250 and 6,103,822. Commercially available polymeric acid functional polyols are available from Inolex Chemical Company under the Lexorez^{®} 1405-65 and Lexorez^{®} 4505-52 brand designations.

In another aspect of the invention, the polymeric acid functional polyol are reaction products of (1) at least one base polyol having at least one of a terminal primary, secondary and/or tertiary hydroxyl group; and (2) an aromatic and/or a non-aromatic polyanhydride. The ester based polyol has a hydroxy number between of 50 to 1000 in one aspect of the invention, from 60 to 200 in another aspect, and from 100 to 200 in still another aspect. The hydroxyl functionality of the base polyol is 1 to 5 in one aspect and 2 in another aspect. The base polyol(s) can be monomeric or polymeric in nature. Further, the base polyol(s) may be of an ester-type or of a non-ester type. Ester types can be formed from the reaction of one or more diacids and one or more monomeric or oligomeric diols. The diacid(s) can be any suitable diacid capable of forming an ester-based polyol having a secondary terminal hydroxyl group. Suitable diacids are described below. The diol can be any primary, secondary, or tertiary diol capable of reacting with a diacid to form an ester base polyol that has a secondary or tertiary terminal hydroxyl group. Such ester type base polyols should provide a secondary and/or tertiary hydroxyl(s) to the ester base polyol. Non-ester type base polyols include those such as polypropylene glycol, polycarbonate, polytetramethylene glycol, or other polymeric or monomeric polyols as described further below.

Suitable backbones for polymeric base polyols include polycarbonates, polyethers, polyesters, polyetheresters, polyacrylates, polybutadienes, polyalkylene and other backbones, wherein such backbones are hydroxy functional as noted herein. In one aspect of the invention, the base polyols utilized for the non-aromatic polyanhydride embodiment of the invention described above can be utilized in the reaction with the aromatic polyanhydrides discussed below. In another aspect of the invention, the base polyol can be represented by the formula below which polyols include at least one of a terminal secondary and/or tertiary hydroxyl group.

HO-c(R¹)ₙ(R²)ₘR³-OH

wherein R¹ is a hydrogen atom; R² can be a substituted or unsubstituted and branched or straight chain aliphatic alkyl and alkoxy groups of from 1 to 20 carbon atoms, including lower alkyl and longer chain species such as methyl, methoxy, ethyl, ethoxy, propyl, propoxy, butyl, butoxy, substituted or unsubstituted cycloaliphatic groups, such as cyclohexyl groups or similar species; substituted or unsubstituted aryl groups, such as benzyl, tolyl, xylyl, phthalic; substituted or unsubstituted aralkyl groups, such as methyltolyl and similar species. R³ can be substituted or unsubstituted aliphatic group of from 1 to 20 carbon atoms, or a cycloaliphatic group such as those species noted above, or a polymeric ether containing 1 to 20 polyalkylene oxide units (e.g., ethylene oxide, propylene oxide, and combinations thereof), a polymeric ester, or a polymeric etherester, polycarbonate, or similar polymer species. In the formula, n is 0 or 1, and m is 1 or 2. Substituted R¹, R², or R³ groups can include one or more of the following exemplary moieties: halogen, carbamate, amine, lower alkyl, carboxylic acid, and hydroxyl. In one aspect of the invention, if R³ is substituted with a hydroxyl group, there is at least one such hydroxyl group in the secondary or tertiary terminal position with respect to the carbon in R³ which is adjacent the end hydroxy group of foregoing polyol formula.

Suitable monomeric polyols include, for example, 2,2,4-trimethyl-1,3-pentane diol (TMPD), 2- butyl-2-ethyl-1,3-propanediol (BEPD), 2,2-diemthyl-1,3-propanediol (neopentyl glycol) (NPG), 1,6-hexanediol (hexamethylene glycol) (HD), ethylene glycol (EG), 1,3-butanedioi (1,3 BD), 1,4-butanediol (1,4-BD), diethylene glycol (DEG), propylene glycol (PG), dipropylene glycol (DPG), hydroxypivalyl hydroxypivalate (HPHP), 2-ethyl-2-(hydroxymethyl)-1,3- propanediol (trimethylol propane) (TMP), and cycloaliphatic diols. Preferably, a polymeric base polyol or monomeric base polyol is selected which has at least one of a terminal secondary and/or tertiary hydroxyl group, including polyethers, polyesters, polyalkylene glycols, 1,3 BD, PG, DPG, TMPD, or combinations of such compounds with each other or with any other suitable primary, terminal hydroxyl group containing polyol such as BEPD, HD, NPG, HPHP, EG, DEG, and TMP.

In forming an ester base polyol, polyols are reacted with diacids and the reaction mixture further includes carboxylic acids or their anhydrides. Suitable diacids for ester base polyol formation include adipic acid, azelaic acid, phthalic acid, orthophthalic acid, hexanedioic, isophthalic acid and cycloaliphatic acids such as 1,4-cyclohexane diacid (CHDA), and other diacids, such as dimer-based di- or polyacids which may be added on their own to the mixture or reacted first with polyols as noted above to form polymeric ester type base polyols.

Further, the base polyol may be an ester polyol that is the reaction product of at least one polyol having at least one of a terminal secondary and/or tertiary hydroxyl group, optionally primary polyols, and a mono- or polycarboxylic acid or anhydride. Suitable polyols having a terminal secondary or tertiary hydroxyl group include PG, TMPD, DPG and 1,3 BD cyclodexane diol. Suitable optional primary polyols include EG, DEG, BD, HD, NPG, BEPD, HPHP and TMP. Suitable mono- or polycarboxylic acids or mono- or polycarboxylic anhydrides include adipic acid, azelaic acid, glutaric acid, cyclohexane diacid, phthalic acids and the anhydrides made therefrom.

The anhydrides used in this aspect of the invention can be an aliphatic or aromatic anhydrides. They can also be mono- or polycarboxylic anhydrides. Examples of suitable anhydrides include but are not limited to 1,2,4-benzene tricarboxylic acid (trimellitic anhydride) (TMA), 1,2,4,5-benzene tetracarboxylic anhydride (pyromellitic dianhydride) (PMDA), hexahydrophthalic anhydride (cyclohexane dicarboxylic anhydride) (HHPA), and (2,5-dioxotetrahydrol)-3-methyl 3- cyclohexene-1,2 dicarboxylic anhydride (BAN).

The polymeric acid functional polyols of this aspect of the invention which are reaction products of (1) at least one base polyol having at least one of a terminal secondary and/or tertiary hydroxyl group; and (2) an aromatic and/or a non-aromatic polyanhydride are disclosed in U.S. Published Patent Application No. 2002/0183443. These polymeric acid functionalized polyols can be synthesized using any of the techniques known in the art, noted herein, and/or described in U.S.-A-5,880,250, and 6,103,822. The pendant carboxylic acid groups containing in the foregoing acid functional polyols can be neutralized by conventional bases known in the art. The amount of acid functional polymeric polyol that can be utilized ranges from 1 to 40 weight percent of the total prepolymer components in the reaction medium. In another aspect of the invention, the amount of acid functional polymeric polyol that can be utilized ranges from 10 to 25 weight percent of the total prepolymer components.

### Optional Anionic Functional Alcohol Water Dispersing Component

In another aspect of the invention, an isocyanate reactive low molecular weight (e.g., monomeric) anionic functional alcohol or diol optionally can be included in the prepolymer reaction mixture to confer added water dispersing properties to the prepolymer. In one embodiment of the invention, the anionic functional alcohols contain neutralizable carboxylic acid groups and are represented by the formula (HO)ₓQ(COOH)_{y}, wherein Q is a straight or branched hydrocarbon radical having 1 to 12 carbon atoms, and x and y are 1 to 3 in one aspect of the invention and x is 2 in another aspect. The hydroxyl groups contain active hydrogen atoms that can react with the polyisocyanate component. Examples of such carboxylic functional alcohols include citric acid, dimethylolpropanoic acid (DMPA), dimethylol butanoic acid (DMBA), glycolic acid, lactic acid, malic acid, dihydroxymalic acid, tartaric acid, hydroxypivalic acid, and the like, and mixtures thereof. In one embodiment of the invention, the carboxylic acid functional alcohol components can be used alone or in combination with the other ionic group and/or non-ionic group containing compounds to convey water dispersing functionality into the prepolymer backbone. The amount of low molecular weight hydroxyl-carboxylic acid compound that can be utilized in the prepolymer ranges from 0 weight percent to 10 weight percent of the total prepolymer components in the reaction medium. When utilized in combination with the other water dispersible ionic or non-ionic functional polyols of the invention the amount can range from 0.5 weight percent to 4 weight percent of the total prepolymer component reactants.

### Optional Non-Ionic Water Dispersing Component

In another aspect of the invention, an isocyanate reactive non-ionic functional alcohol or polyol containing a pendant polyethylene oxide side chain optionally can be included in the prepolymer reaction mixture to confer additional water dispersing properties to the prepolymer. The non-ionic dispersing polyols can be employed alone or in combination with the anionic functional alcohol component discussed above. The use of active hydrogen atom containing isocyanate-reactive compounds containing polyethylene oxide side chains in the preparation of the prepolymer provides pendant and/or terminal polyethylene oxide chains in the resulting prepolymer and allows the preparation of urethane prepolymers with lower acid values which can nevertheless still be effectively dispersed in water to provide an aqueous dispersion of the prepolymer or chain extended polymer. Reduced acid values allow reduced viscosity of the dispersions, thus making them easier to apply as a component of a coating composition.

The non-ionic dispersing polyols containing polyethylene oxide (PEO) side chain containing compound(s) allows the incorporation of pendant and/or terminal polyethylene oxide into the prepolymer backbone. It should be pointed out that side chain incorporation of the polyethylene oxide moiety differs from main chain incorporation in that main chain incorporation of the polyethylene oxide moiety involves both terminals polyethylene oxide segment being incorporated into the polymer backbone, while terminal or side chain incorporation of the polyethylene oxide segment permits a terminal end of the segment to remain free and unbound from the polymer backbone. The PEO chain length will normally be such as to provide a PEO molecular weight of from 175 to 5000 in one aspect of the invention, and from 350 to 1500 in another aspect. A small segment of the PEO chain can be replaced by a propylene oxide unit(s)or a butylene oxide unit(s) but should still contain ethylene oxide units as a major part of the chain. In one aspect of the invention at least 60% of any PEO chain should be ethylene oxide groups. Pendant PEO chains may be introduced by employing a poly difunctional isocyanate-reactive compound having a pendant PEO group(s) in the prepolymer synthesis stage. Terminal PEO chains may be introduced into the prepolymer by employing a monofunctional isocyanate-reactive compound having a PEO chain in the prepolymer synthesis stage. If polyisocyanate components having at least 3 isocyanate groups (e.g., trifunctional isocyanate compounds) are utilized as the polyisocyanate prepolymer component, mono-hydroxyl functional containing compounds such as C₁-C₅ alkoxy(polyalkylene glycols (e.g., methoxy polyethylene glycol), can be incorporated into the urethane backbone as non-terminal pendant groups. In one aspect of invention the isocyanate-reactive groups (active hydrogen atom containing moiety) in such compounds are hydroxyl groups so that the compounds employed are polyols with pendant PEO side chains. In another aspect of the invention the isocyanate-reactive compound is a diol with pendant PEO side chains. The polyols containing pendant PEO side chains are described in U.S.-A-3,905,929. Further, U.S.-A-5,700,867 teaches methods for incorporation of poly(ethylene oxide) side chains at col. 4, line 35 to col. 5, line 45. A commercial compound containing poly(ethylene oxide) side chains is trimethylol propane monoethoxylate mether ether, available as Tegomer^{®} D-3403 from Degussa-Goldschmidt. In one aspect of the invention, the amount of non-ionic water dispersability polyols that are employed can range from 0 to 40 weight percent of the total prepolymer components in prepolymerization medium. When utilized in combination with the water dispersible anionic functional polyols of the invention, the amount can range from 1 weight percent to 30 weight percent of the total prepolymer component reactants in one aspect, and from 1 weight percent to 10 weight percent in another aspect.

It will be recognized by those skilled in the art that the type, combination and amount of water dispersability component(s) that can be utilized in the present invention will depend on the level needed to achieve a water-borne dispersion and the desired properties of the final polyurethane composition. Such determinations are well within the ambit of the artisan having ordinary skill in the art.

### Optional Polyols, Polyamines, and Low Molecular Weight Diols

The prepolymers of the invention optionally can contain a polyol or polyamine component selected from polyester polyols, polyether polyols, polycarbonate polyols, and mixtures thereof. These polyols typically do not contain and pendant or side chain functionality. They can range widely in molecular weight from 50 to 10,000 grams/mole in one aspect of the invention, from 200 to 6,000 grams/mole in another aspect, and from 300 to 3,000 grams/mole in still a further aspect.

The polyester polyols typically are esterification products prepared by the reaction of organic polycarboxylic acids or their anhydrides with a stoichiometric excess of a diol. Examples of suitable polyols for use in the reaction include but are not limited to poly(glycol adipate)s, poly(ethylene terephthalate) polyols, polycaprolactone polyols, orthophthalic polyols, sulfonated and phosphonated polyols, and mixtures thereof.

The diols used in making the polyester polyols include but are not limited to alkylene glycols, e.g., ethylene glycol, 1,2- and 1,3-propylene glycols, 1,2-, 1,3-, 1,4-, and 2,3-butylene glycols, hexane diols, neopentyl glycol, 1,6-hexanediol, 1,8-octanediol, and other glycols such as bisphenol-A, cyclohexane diol, cyclohexane dimethanol (1,4-bis-hydroxymethylcycohexane), 2-methyl-1,3-propanediol, 2,2,4-trimethyl-1,3-pentanediol, diethylene glycol, triethylene glycol, tetraethylene glycol, polyethylene glycol, dipropylene glycol, polypropylene glycol, dibutylene glycol, polybutylene glycol, dimerate diol, hydroxylated bisphenols, polyether glycols, halogenated diols, and mixtures thereof.

Suitable carboxylic acids used in making the polyester polyols include dicarboxylic acids and tricarboxylic acids and anhydrides, e.g., maleic acid, maleic anhydride, succinic acid, glutaric acid, glutaric anhydride, adipic acid, suberic acid, pimelic acid, azelaic acid, sebacic acid, chlorendic acid, 1,2,4-butane-tricarboxylic acid, phthalic acid, the isomers of phthalic acid, phthalic anhydride, fumaric acid, dimeric fatty acids such as oleic acid, and mixtures thereof.

In one aspect of the invention polyester diols include poly(butanediol adipate); hexane diol adipic acid and isophthalic acid polyesters such as hexane adipate isophthalate polyester; hexane diol neopentyl glycol adipic acid polyester diols, e.g., Piothane 67-3000 HNA (Panolam Industries) and Piothane 67-1000 HNA; as well as propylene glycol maleic anyhydride adipic acid polyester diols, e.g., Piothane 50-1000 PMA; and hexane diol neopentyl glycol fumaric acid polyester diols, e.g., Piothane 67-500 HNF. Other commercially available polyester diols include those marketed under the Desmophen® brand name (Bayer Corporation).

Polyether diols may be substituted in whole or in part for the polyester diols. Polyether polyols are obtained in known manner by the reaction of (A) the starting compounds that contain reactive hydrogen atoms, such as water or the diols set forth for preparing the polyester polyols, and (B) alkylene oxides, such as ethylene oxide, propylene oxide, butylene oxide, styrene oxide, tetrahydrofuran, epichlorohydrin, and mixtures thereof. Representative polyethers include poly(propylene glycol), polytetrahydrofuran, and copolymers of poly(ethylene glycol) and poly(propylene glycol).

Polycarbonates include those obtained from the reaction of (A) diols such 1,3-propanediol, 1,4-butanediol, 1,6-hexanediol, diethylene glycol, triethylene glycol, tetraethylene glycol, and mixtures thereof with (B) diarylcarbonates such as diphenylcarbonate or phosgene.

The aforementioned diols useful in making polyester polyols can also be used as additional reactants to prepare the isocyanate terminated prepolymer.

Instead of a long-chain polyol, a long-chain amine may also be used to prepare the isocyanate-terminated prepolymer. Suitable long-chain amines include polyester amides and polyamides, such as the predominantly linear condensates obtained from reaction of (A) polybasic saturated and unsaturated carboxylic acids or their anyhydrides, and (B) polyvalent saturated or unsaturated aminoalcohols, diamines, polyamines, and the like, and mixtures thereof.

Diamines and polyamines are among the compounds useful in preparing the aforesaid polyester amides and polyamides. Suitable diamines and polyamines include but are not limited to 1,2-diaminoethane, 1,6-diaminohexane, 2-methyl-1,5-pentanediamine, 2,2,4-trimethyl-1,6-hexanediamine, 1,12-diaminododecane, 2-aminoethanol, 2-[(2-aminoethyl)amino]-ethanol, piperazine, 2,5-dimethylpiperazine, 1-amino-3-aminomethyl-3,5,5-trimethylcyclohexane (isophorone diamine or IPDA), bis-(4-aminocyclohexyl)-methane, bis-(4-amino-3-methyl-cyclohexyl)-methane, 1,4-diaminocyclohexane, 1,2-propylenediamine, hydrazine, urea, amino acid hydrazides, hydrazides of semicarbazidocarboxylic acids, bis-hydrazides and bis-semicarbazides, diethylene triamine, triethylene tetramine, tetraethylene pentamine, pentaethylene hexamine, N,N,N-tris-(2-aminoethyl)amine, N-(2-piperazinoethyl)-ethylene diamine, N,N'-bis-(2-aminoethyl)-piperazine, N,N,N'-tris-(2-aminoethyl)ethylene diamine, N-[N-(2-aminoethyl)-2-aminoethyll-N'-(2-aminoethyl)-piperazine, N-(2-aminoethyl)-N'-(2-piperazinoethyl)-ethylene diamine, N,N-bis-(2-aminoethyl)-N-(2-piperazinoethyl)amine, N,N-bis-(2-piperazinoethyl)-amine, polyethylene imines, iminobispropylamine, guanidine, melamine, N-(2-aminoethyl)-1,3-propane diamine, 3,3'-diaminobenzidine, 2,4,6-triaminopyrimidine, polyoxypropylene amines, tetrapropylenepentamine, tripropylenetetramine, N,N-bis-(6-aminohexyi)amine, N,N'-bis-(3-aminopropyl)ethylene diamine, and 2,4-bis-(4'-aminobenzyl)-aniline, and mixtures thereof. Suitable commercially available diamines and polyamines include Jeffamine® D-2000 and D-4000, which are amine-terminated polypropylene glycols, differing only by molecular weight, and which are available from Huntsman Chemical Company.

The low molecular weight diols can be selected from any of the diol components used to make the optional polyol component. Suitable diols include but are not limited to alkylene glycols, e.g., ethylene glycol, 1,2- and 1,3-propylene glycols, 1,2-, 1,3-, 1,4-, and 2,3-butylene glycols, hexane diols, neopentyl glycol, 1,6-hexanediol, 1,8-octanediol, and other glycols such as bisphenol-A, cyclohexane diol, cyclohexane dimethanol (1,4-bis-hydroxymethylcycohexane), 2-methyl-1,3-propanediol, 2,2,4-trimethyl-1,3-pentanediol, diethylene glycol, triethylene glycol, tetraethylene glycol, polyethylene glycol, dipropylene glycol, polypropylene glycol, dibutylene glycol, polybutylene glycol, dimerate diol, hydroxylated bisphenols, polyether glycols, halogenated diols, and mixtures thereof.

### Reactive Diluents

The water dispersible OMU urethane prepolymers of the invention are prepared in the presence of at least one reactive diluent in order to substantially or completely replace the high VOC prior art diluents such as NMP. Such polyurethane dispersions prepared from these prepolymers are less hazardous, have higher solids and produce articles having lower modulus and other improved properties compared to articles made from dispersions prepared using the prior art prepolymer diluents. Reactive diluents are liquid compounds that have low volatilities with boiling points of no less than 110°C in one aspect of the invention and no less that 150°C in another aspect, and which contain a polymerizable, ethylenically unsaturated double bond. They lower the viscosity of the prepolymer reaction medium, as well as increase the cure rate and provide solvent and impact resistance to cured coatings versus non-reactive plasticizers. In one aspect of the invention the reactive diluent contains at least two or more polymerizable unsaturated double bonds. As free radicals are generated by the decomposition of peroxides formed from the air oxidation of the unsaturation contained in the pendant fatty acid groups supplied by the alkyds on the polymer backbone or the allyl ether groups of allyl ether group containing reactive diluents (if utilized), a curing reaction occurs between the generated free radical species and the various ethylenically unsaturated double bonds remaining in fatty acid/reactive diluent components. Since the reactive diluents participate in this cure process they are chemically incorporated into the polymer film network.

Examples of reactive diluents include esters of (meth)acrylic acid with aliphatic, aromatic, and polyether polyhydric alcohols, such as , but not limited to, 1,4- butanediol di(meth)acrylate, 1,6-hexanediol di(meth)acrylate, 1,12-dodecyl diacrylate, dipropylene or tripropylene glycol di(meth) acrylate, triethylene glycol di(meth)acrylate, and polyethylene glycol di(meth)acrylate; esters of (meth)acrylic acid with olefinically unsaturated alcohols, such as but not limited to vinyl (meth)acrylate, allyl (meth)acrylate and dicyclopentadienyl acrylate; esters of (meth)acrylic acid with higher polyhydric alcohols such as glycerol tri(meth)acrylate, trimethylolpropane tri(meth)acrylate, trimethylolpropane di(meth)acrylate, pentaerythritol tri(meth)acrylate, pentaerythritol tetra(meth)acrylate, ethoxylated trimethylolpropane tri(meth)acrylate, propoxylated glyceryl tri(meth)acrylate, propoxylated trimethylolpropane tri(meth)acrylate; multifunctional allyl ethers such as but not limited to diallyl phthalate, diallyl carbonate, diallyl ether, diethyleneglycol diallyl ether, triethylene glycol diallyl ether, tetraethylene glycol diallyl ether, propylene glycol diallyl ether, propyleneglycol triallyl ether, neopentylglycol diallyl ether, 1,1,1-trimethylolpropane diallyl ether, 1,2,3- triallyloxypropane, trimethylolpropane triallyl ether, pentaerythritol triallyl ether, allyl sucrose, triallylcyanurate, triallyl isocyanurate, allyl diglycol carbonates, diallyl maleate, diallyl fumarate, triallyl trimellitate, diallyl amine, triallylamine, and triallyl citrate. In addition to the forgoing reactive diluents, the reaction product of pentaerythritol triallyl ether as well as trimethylolpropane diallyl ether with organic mono-, di- and tri-carboxylic acids containing 2 to 22 carbon atoms can be utilized as reactive diluents. The acids can be saturated or unsaturated. As in the description above, the term "(meth)acrylate" refers to methacrylate and acrylate compounds.

The unmodified natural drying oils such as but not limited to soybean, linseed, and sunflower oils also can be utilized as reactive diluents. In carrying out the invention mixtures of the above mention reactive diluents can be used.

The reactive diluent should be present in an amount sufficient to reduce the viscosity of the prepolymer to a desired level in order to facilitate adequate dispersion during processing. in one aspect of the invention, the amount of reactive diluent (and optional organic solvent(s)) can be used in an amount up to 60 weight percent based on the total weight of the reactive diluent and prepolymer components or reactive diluent/optional organic solvent(s). In another aspect of the invention, the reactive diluent can comprise from 2 to 30 weight percent of the overall weight of the prepolymer components in the prepolymer reaction medium.

The present invention optionally comprises an organic solvent. The solvent can be any solvent which will dissolve or disperse the prepolymer component and is water miscible. In one aspect of the invention the organic solvent includes water miscible solvents such as ketone(s) and NMP. The amount of organic solvent that is optionally added to the prepolymer reaction medium should be low enough so that the VOC levels of the polyurethane coating composition are within environmental standards. If employed, the amount of organic solvent can range from 1 to 20 weight percent of the total solvent (including reactive diluent) in the prepolymer formulation.

### Plasticizers

Optionally at least one plasticizer can be introduced into the reaction mixture at any time during or after prepolymer formation or to the polyurethane during or after its manufacture. Plasticizers well known to the art can be selected for use in this invention according to parameters such as compatibility with the particular polyurethane and desired properties of the final coating composition. For example, polyester plasticizers tend to be more compatible with polyester-based polyurethanes. Plasticizers can be selected to impart particular properties such as flame retardancy to the polyurethanes, or to enhance particular properties such as wetting, emulsifying, conditioning, and UV absorption in end-use personal care applications. The plasticizers typically are used in amounts from 2 weight percent to 50 weight percent in one aspect of the invention, from 3 to 30 wt.% in another aspect, and from 4 to 15 weight percent in a further aspect, based on the total weight of the prepolymer components. The optimum amount of plasticizer is determined according to the particular application, as is well known to those skilled in the art. The addition of plasticizer(s) to the reaction medium in combination with the reactive diluent(s) allows the prepolymer formation process to be conducted in the substantial absence and preferably in the complete absence of a VOC producing organic solvent. However, it is contemplated within the scope of this invention that the plasticizer and organic solvent can be utilized alone or in combination with the reactive diluent.

Suitable plasticizers include but are not limited to ester derivatives of organic acids and anhydrides such as adipic acid, azelaic acid, benzoic acid, citric acid, dimer acids, fumaric acid, isobutyric acid, isophthalic acid, lauric acid, linoleic acid, maleic acid, maleic anyhydride, melissic acid, myristic acid, oleic acid, palmitic acid, phosphoric acid, phthalic acid, ricinoleic acid, sebacic acid, stearic acid, succinic acid, 1,2-benzenedicarboxylic acid, and mixtures thereof. Also suitable are epoxidized oils, glycerol derivatives, paraffin derivatives, sulfonic acid derivatives, and mixtures thereof and with the aforesaid derivatives. Specific examples of suitable plasticizers include but are not limited to diethylhexyl adipate, heptyl nonyl adipate, diisodecyl adipate, the adipic acid polyesters sold by Solutia as the Santicizer® series, dicapryl adipate, dimethyl azelate, diethylene glycol dibenzoate and dipropylene glycol dibenzoate (such as the K-Flex^{®} esters from Noveon, Inc.), polyethylene glycol dibenzoate, 2,2,4-trimethyl-1,3-pentanediol monoisobutyrate benzoate, 2,2,4-trimethyl-1,3-pentanediol diisobutyrate, methyl (or ethyl, or butyl) phthalyl ethyl glycolate, triethyl citrate, dibutyl fumarate, 2,2,4-trimethyl-1,3-pentanediol diisobutyrate, methyl laurate, methyl linoleate, di-n-butyl maleate, tricapryl trimellitate, heptyl nonyl trimellitate, triisodecyl trimellitate, triisononyl trimellitate, isopropyl myristate, butyl oleate, methyl palmitate, tricresyl phosphate, dimethyl phthalate, diethyl phthalate, dibutyl phthalate, diisobutyl phthalate, di-2-ethylhexyl phthalate, octyl decyl phthalate, diisodecyl phthalate, heptyl nonyl phthalate, diundecyl phthalate, ditridecyl phthalate, dicyclohexyl phthalate, diphenyl phthalate, butyl benzyl phthalates such as the n-butylbenzyl ester of o-phthalic acid, isodecyl benzyl phthalate, alkyl (C₇-C₉) benzyl phthalate, dimethoxyethyl phthalate, 7-(2,6,6,8-tetramethyl-4-oxa-3-oxo-nonyl) benzyl phthalate, di-2-ethylhexyl sebacate, butyl ricinoleate, dimethyl sebacate, methyl stearate, diethyl succinate, the butyl phenylmethyl ester of 1,2-benzenedicarboxylic acid, glycerol triacetate, chloroparaffins having 40% to 70% Cl, o-,p-toluenesulfonamide, N-ethyl p-toluene sulfonamide, N-cyclohexyl p-toluene sulfonamide, sulfonamide-formaldehyde resin, aromatic petroleum condensate, partially hydrogenated terphenyls, silicone plasticizers such as dimethicone copolyol esters, dimethiconol esters, silicone carboxylates, guerbet esters, and mixtures thereof.

### Optional Crosslinkable Functionality

In addition to the crosslinkable alkyd groups built into the polymer backbone optional self-crosslinkable groups can be built into the backbone during prepolymer formation. The crosslinkability of the polyurethane dispersion at ambient temperature can be enhanced by incorporating crosslinkable carbonyl functionality into polymer backbone. Subsequent to chain extension the carbonyl functionality in the polymer backbone can be reacted with a polyhydrazide or a polyhydrazone crosslinking agent which is added to the polyurethane dispersion. Upon drying and a concomitant drop in pH, coatings prepared from the dispersion form crosslinks by reaction of the carbonyl groups and the crosslinking agent via azomethine group formation.

Suitable polyhydrazides include but are not limited to the dihydrazides of organic dicarboxylic acids specific examples being oxalic acid dihydrazide, malonic acid dihydrazide, succinic acid dihydrazide, adipic acid dihydrazide, sebacic acid dihydrazide, phthalic acid dihydrazide, terephthalic acid dihydrazide, naphthalenedicarboxylic acid dihydrazide, 1,2-, 1,3-, and 1,4-cyclohexane dicarboxylic acid dihydrazide, azelaic acid dihydrazides; also carbonic acid hydrazides, bis-semicarbazides, trihydrazides, dihydrazinoalkones and dihydrazides of aromatic hydrocarbons, for example 1,4-dihydrazinobenzene and 2,3-dihydrazinonophthalene.

A hydrazone (i.e., a hydrazide blocked with an aldehyde or ketone) is formed from the reaction of a hydrazide with an aldehyde or a ketone, such as, without limitation, formaldehyde, acetone and methylethyl ketone. Exemplary hydrazones are the hydrazones of the foregoing polyhydrazides set forth above.

If a polyhydrazide (or hydrazones thereof) crosslinking agents are utilized in the coating composition of the invention, they are added at a level to sufficiently react with and crosslink the carbonyl functionality on the polyurethane polymer backbone. The polyhydrazide or polyhydrazone crosslinking agents can be used in an amount that provides 0.02 to 1.6 moles, hydrazide or hydrazone groups per mole of carbonyl functional groups present in on the polymer backbone. In another embodiment of the invention the amount of hydrazide (or hydrazones thereof) to carbonyl functionality can range from 0.05 to 0.9 moles. The crosslinking agent is not added to the composition until after chain extension. The reaction between the carbonyl functionality and the hydrazide or hydrazone crosslinking agent does not commence until water (and volatile crosslinking agent) evaporates (with concomitant drop in pH) from the applied coating composition during film formation. In the case of hydrazone crosslinking agents, the drop in pH results in regeneration of the hydrazide with the aldehyde or ketone also being removed by evaporation. Accordingly, in one aspect of the invention the aldehyde and ketone used to form the hydrazone can have a boiling point that readily permits volatilization at ambient temperatures.

As discussed above, carbonyl functionality can be introduced into the polyurethane backbone during prepolymer formation. In one embodiment of the invention, an isocyanate reactive carbonyl compound having at least one isocyanate reactive moiety (active hydrogen atom) in one aspect, and at least two isocyanate reactive moieties in another aspect, are reacted with the polyisocyanate prepolymer component and become incorporated into the prepolymer chain. Carbonyl containing compounds with only one isocyanate reactive active hydrogen atom can be used if the urethane has been compensatingly branched with a triisocyanate prepolymer component. Examples of such compounds are dihydroxy ketones such as, for example, dihydroxyacetone and the adduct obtained by a Michael-addition reaction of diacetoneacrylamide with a diamine or an alkanolamine. Adducts of diepoxides and ketocarboxylic acids are also suitable. Exemplary diepoxides are glycidyl ethers of bisphenols, such as 2,2-bis-(4-hydroxyphenyl)-propane (bisphenol A), 4,4'-dihydroxybenzophenone, 1,1-bis-(4-hydroxyphenyl)-ethane, 1,1-bis-(4-hydroxyphenyl)-isobutane, 2,2-bis-(4-hydroxy-tert-butylphenyl)-propane, bis-(4-hydroxynaphthyl)-methane and 1,5-dihydroxynaphthalene. Diglycidyl ethers of dihydric alcohols, for example, of ethylene glycol, diethylene glycol, triethylene glycol, 1,2-propylene glycol, 1,3-propanediol, 1,5-pentanediol, 1,6-hexanediol and 2,2-bis-(4-hydroxycyclohexyl)-propane, are also suitable. It is also possible to use diglycidyl esters of dicarboxylic acids such as oxalic acid, succinic acid, glutaric acid, terephthalic acid, 2,6-naphthalenedicarboxylic acid and dimerized linolenic acid are suitable. Exemplary ketocarboxylic acids are pyruvic acid and levulinic acid.

Other suitable components are ketocarboxylates which are obtainable by partial esterification of ketocarboxylic acids with polyalcohols or by partial transesterification of ketocarboxylates with polyalcohols (partial esters). These esters also have one or more, preferably two, hydroxyl groups. Partial esters, such as pyruvates, acetoacetates, levulinates or mixtures thereof, whose alcohol components are aliphatic polyalcohols, such as the diols ethylene glycol, diethylene glycol or 1,6-hexanediol or the polyols glycerol, trimethylolpropane, trimethylolethane, pentaerythritol or sorbitol, are suitable.

The amount of the crosslinkable carbonyl functional compound that can be employed in the prepolymer can range from 1 to 30 weight percent of the total amount of prepolymer components. The preparation of carbonyl functional polymers is described in U.S.-A-4,983,662.

### Prepolymer Ratios of Isocyanate to Active Hydrogen

The polyisocyanate prepolymer component is employed in a stoichiometric excess to the active hydrogen components utilized in the formation of the isocyanate terminated prepolymer component. The stoichiometric ratio of isocyanate to active hydrogen containing component should be in an amount that ensures that the formed prepolymer is terminated with isocyanate groups. The ratio of isocyanate to active hydrogen in the prepolymer typically ranges from 1.3/1 to 2.5/1 in one aspect of the invention, from 1.5/1 to 2.1/1 in another aspect, and from 1.7/1 to 2/1 in still further aspect.

### Prepolymer Formation

The prepolymers of the invention are formed as a reaction product of (a) at least one organic polyisocyanate; (b) an isocyanate reactive oil modified polyol component having olefinic unsaturation; (c) an isocyanate reactive polymeric polyol component containing pendant anionic functional groups; (d) a reactive diluent component containing at least two ethylenically unsaturated double bonds; and optionally an isocyanate reactive component selected from (e) a carbonyl functional component; (f) an anionic functional alcohol component and salts thereof; (g) an alcohol component containing a polyalkyleneoxide side chain; and mixtures thereof. In addition to the foregoing reactants at least one of an isocyanate reactive component selected from (h) polyester polyols, polyether polyols, polycarbonate polyols, and polyamines, and mixtures thereof can be added to the reaction mixture. The prepolymer reactants are dissolved in the reactive diluent and the reaction is allowed to proceed under substantially anhydrous conditions at a temperature between 45 and 120°C until reaction between the polyisocyanate and active hydrogen containing compounds is substantially complete. It should be noted that the reaction temperature can vary depending on the reactants utilized.

The formation of the isocyanate-terminated prepolymer may be achieved without the use of a catalyst. However, if desired catalysts can be used to assist prepolymer formation. Examples of suitable catalysts include stannous octoate, dibutyl tin dilaurate, and tertiary amine compounds such as triethylamine and bis-(dimethylaminoethyl) ether, morpholine compounds such as β,β'-dimorpholinodiethyl ether, bismuth carboxylates, zinc bismuth carboxylates, iron (III) chloride, potassium octoate, potassium acetate, and DABCO® (diazabicyclo[2.2.2]octane), from Air Products. Zirconium or titanium based compounds also can be utilized. A commercially available catalyst is FASCAT® 2003, a mixture of 2-ethylhexanoic acid and stannous octoate, from Elf Atochem North America. The amount of catalyst used is typically from 5 to 200 parts per million of the total weight of prepolymer reactants.

An organic solvent optionally can be added before or after prepolymer formation to control the viscosity. In one embodiment of the invention no organic solvents are added.

An aqueous polyurethane dispersion can then be prepared by neutralizing the pendant anionic groups (e.g., carboxylic), dispersing the neutralized isocyanate-terminated urethane prepolymer (optionally carried in an organic solvent medium) in an aqueous medium by techniques well known in the art and then chain extending the prepolymer with active hydrogen-containing chain extender in the aqueous phase.

Neutralization of the prepolymer with pendant anionic (e.g., carboxyl) groups converts the pendant carboxyl groups to carboxylate anions, enhancing the water-dispersability of the prepolymer and the chain extended urethane polymer. Anionic group neutralization can occur before or when the prepolymer is added to water (i.e. neutralizing agent in the water phase when the unneutralized prepolymer is added. Moreover, one can use combinations of pre-neutralization of the prepolymer along with using additional neutralizing agents in the water phase. If the polymer contains sufficient nonionic (steric) stabilization, neutralization of anionic groups can occur before or after the prepolymer is chain extended. The prepolymer can be added to the water with agitation or water can be added to the prepolymer. Suitable neutralizing agents include but are not limited to tertiary amines, alkai metal hydroxides (e.g., sodium and potassium), ammonium hydroxide, phosphines, and other agents well known to those skilled in the art. Suitable tertiary amines include triethyl amine (TEA), dimethyl ethanolamine (DMEA), N-methyl morpholine, and mixtures thereof. It is recognized that primary or secondary amines may be used in place of tertiary amines, if they are sufficiently hindered to avoid interfering with the chain extension process.

The chain extender can be added to the aqueous dispersion of prepolymer or in an alternative embodiment it may be already present in the aqueous medium when the prepolymer is added prior to dispersion. If any organic solvent is present in the dispersion in can be removed, if desired, by conventional means known in the art, such as, for example, by distillation.

The chain extender can be selected from water, an inorganic or organic polyamine having an average of 2 or more primary and/or secondary amine groups, polyalcohols, ureas, or combinations thereof. Suitable organic amines for use as a chain extender include but not limited to diethylene triamine (DETA), ethylene diamine (EDA), meta-xylylenediamine (MXDA), aminoethyl ethanolamine (AEEA), 2-methyl pentane diamine, and mixtures thereof. Also suitable for practice in the present invention are propylene diamine, butylene diamine, hexamethylene diamine, cyclohexylene diamine, phenylene diamine, tolylene diamine, 3,3-dichlorobenzidene, 4,4'-methylene-bis-(2-chloroaniline), 3,3-dichloro-4,4-diamino diphenylmethane, sulfonated primary and/or secondary amines, and mixtures thereof. Suitable inorganic amines include but are not limited to hydrazine, substituted hydrazines, and hydrazine reaction products (e.g., hydrazides), and mixtures thereof. The amount of chain extender typically ranges from 0.5 to 0.95 equivalents based on available isocyanate.

### Other Additives

Neutralization agents can optionally be employed in the dispersions of the invention and the coating compositions prepared from such dispersions. The pH of the compositions can range from 7 to 10. Suitable neutralization agents include but are not limited to alkali hydroxides such as lithium, sodium and potassium, and organic bases such as ammonia and tertiary amines such as triethanolamine, aminomethyl propanol, dimethyl ethanol amine, trimethylamine, triethylamine morpholine, and mixtures thereof.

As discussed above, drying agents are optionally added to the composition as a crosslinking adjuvant for the pendant alkyd unsaturation in the polymer backbone (to assist in peroxide decomposition to free radical species). Suitable drying agents include but are not limited to polyvalent salts containing cobalt, calcium, copper, zinc, iron, zirconium and manganese as the cation component and halides, nitrates, sulphates, acetates, napthenates or acetoacetonates as the anion component of the salt. In one aspect of the invention, the amount of drying agent used is in the range from 0 to 3% metal content by weight of the composition. In another aspect, the amount of drying agent employed can range from 0 to 1 %.

Other additives well known to those skilled in the art can be used to aid in preparation of the dispersions of this invention. Such additives include surfactants, stabilizers, defoamers, thickeners, leveling agents, antimicrobial agents, antioxidants, UV absorbers, fire retardants, pigments. These additives can be added at any stage of the manufacturing process.

The dispersions of this invention typically have total solids of at least 20 weight percent in one aspect, at least 30 weight percent in another aspect, and at least 40 weight percent in a further aspect, and 45 weight percent in still another aspect, based on the weight of the total coating composition.

The aqueous dispersions of the invention can be employed as coating compositions, for which purpose they may be further diluted with water and/or organic solvents, or they may be supplied in more concentrated form by evaporation of water and/or organic components of the liquid medium. As coating compositions, they may be applied to any substrate including wood, metals, glass, cloth, leather, paper, plastics and foam, by any conventional method including brushing, dipping, flow coating and spraying.

The following examples are presented for the purpose of illustrating the invention disclosed herein in greater detail. However, the examples are not to be construed as limiting the invention herein in any manner. Unless otherwise specified all parts are given by weight.

### Chemicals List

Dapro^{®} 7007 = manganese based catalytic alkyd drying agent from Elementis Specialties Inc.
DMPA = dimethylolpropionic acid
Epon^{®} 825 = bisphenol A diglycidyl ether from Resolution Performance Products (Hexion Specialty Chemicals, Inc.)
Erisys^{®} GE-22 = cyclohexanedimethanol diglycidyl ether from CVC Chemicals Inc:
Erisys^{®} GE-23 = polypropylene glycol diglycidyl ether from CVC Chemicals Inc. IPA = isopropyl alcohol
IPDI = isophorone diisocyanate
Lexorex^{®} 1405-65 = carboxyl functional polymeric polyester polyol (OH No. 62.9) from Inolex Chemical Company
Paintable Dry Film Mold Release = contains hexafluoropropylene epoxide from IMS Company
Pamolyn^{®} 380 = synthetically conjugated linoleic acid from Eastman Chemical Company
Piothane^{®} S-500 = modified natural oil based polyol (OH No. 194.3) from Panolam Industries International, Inc. Corporation
Pirfac^{™} 5981 = dehydrated castor oil fatty acid from Uniqema (ICI Group of Companies)
MPEG 750 = methoxypolyethylene glycol (OH No. 74.8)
Mylar^{®} = polyester film from E.I. DuPont De Nemours and Company
NMP = N-methylpyrrolidone
SR454 = ethoxylated(3) trimethylolpropane triacrylate from Sartomer Company
SR507 = triallyl cyanurate from Sartomer Company
Teflon^{®} = tetrafluoroethylene fluorocarbon based release agent
Tegomer^{®} D3403 = trimethylolpropane monoethoxylate methyl ether from Degussa-Goldschmidt
THF = tetrahydrofuran
TMP = trimethylolpropane
TPP = triphenyl phosphine

### Example 1

An alkyd/unsaturated oil functional diol is prepared by combining components 1 to 3 set forth in the table below in a 4 neck flask equipped with a thermometer, overhead stirrer and nitrogen gas inlet. With stirring and under a nitrogen blanket, the temperature of the reaction mixture is raised to 100°C to 103°C and held at this temperature for 1 hour. The temperature is then raised to 110°C to 114°C and held there for an additional hour. Finally, the reaction mixture is raised to 121°C to 125°C and held at this temperature for 2 hours or until the acid number was <1.0 (mg/g). The fatty acid diol product has an amber color and a Brookfield viscosity of approximately 610 mPa·s (cps) at 23°C (20 rpm, No 3 spindle) and an OH number of 118.2.

| Component | Material | Parts |
|---|---|---|
| 1 | Erisys^{®} GE-23 | 164.0 |
| 2 | Pamolyn^{®} 380 | 235.2 |
| 3 | TPP | 3.0 |

### Example 2

An alkyd/unsaturated oil functional diol is prepared by combining components 1 to 3 of the ingredients set forth in the table below in a 4 neck flask equipped with a thermometer, overhead stirrer and nitrogen gas inlet. With stirring and under a nitrogen blanket, the temperature of the reaction mixture is raised to 100°C to 103°C and held at this temperature for 1 hour. The temperature is then raised to 110°C to 114°C and held there for an additional hour. Finally the reaction mixture is raised to 121°C to 125°C and held at this temperature for 2 hours or until the acid number was <1.0 (mg/g). The fatty acid diol product has an amber color and a Brookfield viscosity of approximately 1100 mPa·s (cps)at 23°C (20 rpm, No. 3 spindle) and an OH number of 127.6.

| Component | Material | Parts |
|---|---|---|
| 1 | Erisys^{®} GE-22 | 287.8 |
| 2 | Prifac^{™} 5981 | 518.4 |
| 3 | TPP | 6.6 |

### Example 3

A ketone functional diol is prepared by combining components 1 to 3 of the set forth in the table below in a 4 neck flask equipped with a thermometer, overhead stirrer and nitrogen gas inlet. With stirring and under a nitrogen blanket, the temperature of the reaction mixture is raised to 100°C to 103°C and held at this temperature for 1 hour. The temperature is then raised to 110°C to 114°C and held there for an additional hour. Finally the reaction mixture is raised to 121°C to 125°C and held at this temperature for 2 hours or until the acid number is <1.0 (mg/g). The ketone diol product has a slight amber color and a Brookfield viscosity of approximately 2200 mPa·s (cps) at 70°C (20 rpm, No. 4 spindle) and an OH number of 190.8.

| Component | Material | Parts |
|---|---|---|
| 1 | Epon^{®} 825 | 245.6 |
| 2 | Levulinic Acid | 158.6 |
| 3 | TPP | 3.1 |

### Example 4

A prepolymer is prepared by combining items 1 to 5 of the ingredients below at 60°C to a 4 neck flask equipped with a thermometer, overhead stirrer and gas inlet. The temperature of the reaction mixture is raised to 95°C to 97°C and held at this temperature for 2 hours or until the theoretical NCO% is reached as indicated by titration of a small sample. After the first stage is complete the temperature is then adjusted to 72°C to 74°C and reactants 6 to 8 are added and the temperature held for another 1.5 hours or until theoretical NCO% was reached as indicated by titration of a small sample.

| Component | Material | Parts |
|---|---|---|
| 1 | Unsaturated oil functional diol (product of Example 1) | 6.57 |
| 2 | Piothane® S-500 | 26.22 |
| 3 | NMP | 6.04 |
| 4 | SR507 | 7.30 |
| 5 | IPDI | 31.78 |
| 6 | MPEG 750 | 4.21 |
| 7 | TMP | 0.67 |
| 8 | Lexorez® 1405-65 | 17.17 |

A polyurethane dispersion is prepared by neutralizing the above prepolymer with 27.8 parts of triethylamine at 60°C to 64°C and dispersing the neutralized prepolymer in water while maintaining the water/dispersion temperature below 28°C. The dispersed prepolymer is extended with hydrazine to give a 52.1 % solids polyurethane dispersion with low sediment, a viscosity of 410 mPa·s (cps) (at 25° C) at a pH of 7.5.

### Example 5

A prepolymer is prepared by combining reactants 1 to 6 of the ingredients below at 60°C to a 4 neck flask equipped with a thermometer, overhead stirrer and gas inlet. The temperature of the reaction mixture is raised to 95°C to 97°C and held at this temperature for 2 hours or until the theoretical NCO% is reached as indicated by titration of a small sample. After the first stage is complete the temperature is then adjusted to 72°C to 74°C and reactants 7 to 10 are added and the temperature held there for another 1.5 hours or until theoretical NCO% is reached as indicated by titration of a small sample.

| Component | Material | Parts |
|---|---|---|
| 1 | Ketone functional diol (product of Example 3) | 4.40 |
| 2 | Piothane^{®} S-500 | 26.56 |
| 3 | NMP | 5.28 |
| 4 | Benzyl benzoate | 3.96 |
| 5 | SR454 | 3.96 |
| 6 | IPDI | 34.89 |
| 7 | MPEG 750 | 4.39 |
| 8 | TMP | 0.79 |
| 9 | DMPA | 0.78 |
| 10 | Lexorez® 1405-65 | 15.00 |

A polyurethane dispersion is prepared by neutralizing the above prepolymer with 36.7 parts of triethylamine at 60°C to 64°C and dispersing the neutralized prepolymer in water while maintaining the water/dispersion temperature below 28°C. The dispersed prepolymer is extended with hydrazine to give a 48% solids polyurethane dispersion with low sediment, a viscosity of 540 cps (at 25°C) at a pH of 7.8. To this dispersion adipic acid dihydrazide (ADH) is added to allow self-crosslinking between carbonyl/ketone groups in incorporated into the polymer via the carbonyl/ketone functional diol.

### Example 6

A prepolymer is prepared by combining components 1 through 6 of the ingredients below at 60°C to a 4 neck flask equipped with a thermometer, overhead stirrer and gas inlet. The temperature of the reaction mixture is raised to 92°C to 95°C and held at this temperature for 2 hours or until the theoretical NCO% was reached as indicated by titration of a small sample. After the first stage is complete the temperature is then adjusted to 72°C to 74°C and component 7 is added and the temperature held there for another 1.5 hours or until theoretical NCO% was reached as indicated by titration of a small sample.

| Component | Material | Parts |
|---|---|---|
| 1 | Unsaturated oil functional diol (product of Example 2) | 6.60 |
| 2 | Piothane® 5-500 | 26.37 |
| 3 | Tegomer® D3403 | 3.78 |
| 4 | NMP | 4.97 |
| 5 | SR454 | 9.10 |
| 6 | IPDI | 31.0 |
| 7 | Lexorez® 1405-65 | 18.18 |

A polyurethane dispersion is prepared by neutralizing the above prepolymer with 11.9 parts of triethylamine at 60°C to 64°C and dispersing the neutralized prepolymer in water while maintaining the water/dispersion temperature below 28°C. The dispersed prepolymer is extended with hydrazine to give a 51.5% solids polyurethane dispersion with low sediment, a Brookfield viscosity of 420 mPa·s (cps) at 25°C (20 rpm, No. 3 spindle) at a pH of 7.3.

### Example 7

A prepolymer is prepared by combining components 1 through 7 of the ingredients below at 60°C to a 4 neck flask equipped with a thermometer, overhead stirrer and gas inlet The temperature of the reaction mixture is raised to 92°C to 95°C and held at this temperature for 2 hours or until the theoretical NCO% was reached as indicated by titration of a small sample. After the first stage is complete the temperature is then adjusted to 72°C to 74°C and item 8 is added and the temperature held there for another 1.5 hours or until theoretical NCO% was reached as indicated by titration of a small sample.

| Component | Material | Parts (pph) |
|---|---|---|
| 1 | Unsaturated oil functional diol (product of Example 2) | 6.58 |
| 2 | Piothane® S-500 | 26.33 |
| 3 | Tegomer® D3403 | 3.79 |
| 4 | NMP | 4.96 |
| 5 | SR454 | 4.53 |
| 6 | Benzyl benzoate | 4.53 |
| 7 | IPDI | 31.13 |
| 8 | Lexorez® 1405-65 | 18.15 |

A polyurethane dispersion is prepared by neutralizing the above prepolymer with 16.7 parts of triethylamine at 60°C to 64°C and dispersing the neutralized prepolymer in water while maintaining the water/dispersion temperature below 28°C. The dispersed prepolymer was extended with hydrazine to give a 50.1 % solids polyurethane dispersion with low sediment, a Brookfield viscosity of 1200 mPa·s (cps) at 25°C (20 rpm, No. 3 spindle) at a pH of 7.4.

### Example 8

A prepolymer is prepared by combining components 1 to 6 below at 60°C to a 4 neck flask equipped with a thermometer, overhead stirrer and gas inlet. The temperature of the reaction mixture is raised to 95°C to 97°C and held at this temperature for 2 hours or until the theoretical NCO% was reached as indicated by titration of a small sample. After the first stage is complete the temperature is then adjusted to 72°C to 74°C and component 8 is added and the temperature held there for another 1.5 hours or until theoretical NCO% is reached as indicated by titration of a small sample.

| Component | Material | Parts |
|---|---|---|
| 1 | Unsaturated oil functional diol (product of Example 1) | 32.5 |
| 2 | Piothane® S-500 | 130.0 |
| 3 | NMP | 24.5 |
| 4 | SR507 | 41.2 |
| 5 | Tegomer® D3403 | 18.7 |
| 6 | IPDI | 153.4 |
| 8 | Lexorez® 1405-65 | 91.4 |

A polyurethane dispersion is prepared by neutralizing the above prepolymer with 25.7 parts of triethylamine at 60°C to 64°C and dispersing the neutralized prepolymer in water while maintaining the water/dispersion temperature below 28°C. The dispersed prepolymer is extended with hydrazine to give a 47.6% solids polyurethane dispersion with low sediment, a viscosity of 560 mPa·s (cps) (at 25°C) at a pH of 7.7.

### Example 9

A prepolymer is prepared by combining components 1 to 6 below at 60°C to a 4 neck flask equipped with a thermometer, overhead stirrer and gas inlet. No anionic functional polymeric polyol is employed in the prepolymer reaction medium. Using a dry nitrogen atmosphere in the reactor, the temperature of the reaction mixture is raised to 92°C to 95°C and held at this temperature for 2 hours or until the theoretical NCO% was reached as indicated by titration of a small sample. After the first stage is complete the temperature is then adjusted to 82°C to 85°C and component 7 is added and the temperature held at 82 to 85°C for another 1.5 hours or until theoretical NCO% is reached as indicated by titration of a small sample.

| Component | Material | Parts |
|---|---|---|
| 1 | Unsaturated oil functional diol (product of Example 2) | 33.2 |
| 2 | Piothane® S-500 | 132.7 |
| 3 | Tegomer® D3403 | 19.1 |
| 4 | NMP | 23.0 |
| 5 | SR507 | 39.0 |
| 6 | IPDI | 180.1 |
| 7 | DMPA | 13.8 |

A polyurethane dispersion is prepared by neutralizing the above prepolymer with 12.5 parts of triethylamine at 60°C to 64°C and dispersing the neutralized prepolymer in water while maintaining the water/dispersion temperature below 28°C. The dispersed prepolymer is extended with hydrazine to give a 48.6% solids polyurethane dispersion with low sediment, a viscosity of 9000 mPa·s (cps) (at 25°C) at a pH of 7.8.

### Example 10

A prepolymer is prepared by combining components 1 to 6 below at 60°C to a 4 neck flask equipped with a thermometer, overhead stirrer and gas inlet. No reactive diluent component is utilized in the polymerization medium. Using a dry nitrogen atmosphere in the reactor, the temperature of the reaction mixture is raised to 78°C to 80°C and held at this temperature for 2 hours or until the theoretical NCO% was reached as indicated by titration of a small sample.

| Component | Material | Parts |
|---|---|---|
| 1 | Unsaturated oil functional diol (prepared by the method of Example 2 (OH No. 140.0)) | 43.5 |
| 2 | Piothane® S-500 | 130.5 |
| 3 | Tegomer® D3403 | 20.9 |
| 4 | NMP | 70.0 |
| 5 | Lexorez® 1405-65 | 74.8 |
| 6 | IPDI | 152.0 |

A polyurethane dispersion was prepared by neutralizing the above prepolymer with 8.9 parts of triethylamine at 65°C to 70°C and dispersing the neutralized prepolymer in water while maintaining the water/dispersion temperature below 28°C. The dispersed prepolymer was extended with hydrazine to give a 47.8% solids polyurethane dispersion with low sediment, a viscosity of 590 mPa·s (cps) (at 25°C) at a pH of 7.5.

### Example 11

Coating compositions are formulated from the polyurethane dispersions set forth in the foregoing examples and cast and cured into films. The films are then evaluated for solvent swell and mar resistance properties. The coating formulations are prepared by placing 100 parts of the polyurethane dispersions obtained in Examples 4, 8, 9 and 10 into separate glass containers. To each container is then added 0.36 parts of a 33% (by wt.) solution of an alkyd drying agent (Dapro^{®} 7007, Elementis Specialties Inc., Hightstown, NJ) in dipropyleneglycol monomethylether. After thorough stirring each of the coating formulations are allowed to "rest" for 24 hours whereupon films cast from each coating sample are prepared for solvent swell testing and mar resistance testing.

### Solvent Swell Test Procedure

Films of each coating formulation are cast onto Mylar^{®}) substrates coated with a release agent (Paintable Dry Film Mold Release with Krytox^{®}) by pooling 5-6 grams of each sample onto the substrate and drawing a "bird" type blade applicator gage (calibrated to 254 µm (10 mil) wet thickness) across each pooled sample. The drawn films are cured for 1 week at ambient room temperature at which point circular 1 inch (25.4 mm) diameter samples are punched out of each cured film and immersed in solvent for 24 hours. The wet state swollen film samples are immediately measured for their solvent swell diameter. The results are set forth in the table below.

| **Polyurethane Dispersion (Example No.)** | **THF Swell (final diameter in mm)** | **IPA Swell (final diameter in mm)** |
|---|---|---|
| 4 | 29.0 | 39.0 |
| 8 | 29.5 | 38.5 |
| 9 (comparative) | 29.0 (fragile) | 39.0 (fragile) |
| 10 (comparative) | 31.0 (fragile) | 41.0 (fragile) |

Films prepared from the polyurethane dispersions of the invention are dimensionally stable and firm to the touch while the films prepared in accordance with the comparative examples are "fragile" in that they immediately break apart upon light touching with a finger.

### Mar Test Procedure

Films of each coating formulation are cast onto separate sheets of 21.59×27.94 cm (8.5 x 11 inch) black Leneta paper by pooling 5 to 6 grams of each sample onto the substrate and drawing a "bird" type blade applicator gage (calibrated to 127 µm (5 mil) wet thickness) across each pooled sample. The drawn films are cured at ambient room temperature for the time periods set forth below. Each of the samples is subjected to a series of 3 finger flicks at full force allowing the edge of the fingernail to impact the surface of the cured film at 3 different locations. Then each sample is lightly wiped with a lab tissue and a composite rating for mar resistance is assigned according to the following rating scale:
- Poor =: severe marring/marking
- Fair =: moderate marring/marking
- Good =: light marring/marking
- Very Good =: very light marring/marking
- Excellent =: no noticeable marring/marking
The ratings are set forth in the table below.

| | Polyurethane Dispersion Example No. | | |
|---|---|---|---|
| Cure Time (days) | 4 | 9 (comparative) | 10 (comparative) |
| 3 | good | poor | poor |
| 4 | very good | poor | poor |
| 5 | very good | poor | poor |
| 7 | excellent | poor | poor |
| 10 | excellent | poor | poor |
| 14 | excellent | poor | fair |

## Claims

1. A water dispersible, self-crosslinkable isocyanate terminated polyurethane prepolymer composition reacted from a mixture comprising:
a) an organic polyisocyanate component;
b) an isocyanate reactive oil modified polyol component having olefinic unsaturation;
c) an isocyanate reactive polymeric polyol component containing pendant anionic functional groups; and
d) a reactive diluent component containing at least two ethylenically unsaturated double bonds.

2. A polyurethane prepolymer of claim 1, wherein said mixture comprises an isocyanate reactive component selected from e) a carbonyl functional component; f) an anionic functional alcohol component and salts thereof; g) an alcohol component containing a polyalkyleneoxide side chain; and mixtures thereof.

3. A polyurethane prepolymer of claim 2, wherein said mixture comprises a polyol component selected from a polyester polyol, a polyether polyol, a polycarbonate polyol, a low molecular weight diol, and mixtures thereof.

4. A polyurethane prepolymer of claim 2, wherein said mixture comprises a long chain amine component selected form a polyester amide, a polyamide, and mixtures thereof.

5. A polyurethane prepolymer of claim 1 or 2, wherein component a) is selected from aliphatic, cycloaliphatic, araliphatic, aromatic polyisocyanates, and mixtures thereof containing 2 or more isocyanate groups.

6. A polyurethane prepolymer of claim 5, wherein component a) is selected from hexamethylene-1,6-diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, dicyclohexylmethane diisocyanate, isophorone diisocyanate, 1,4-cyclohexane diisocyanate, 1,3-bis-(isocyanatomethyl) cyclohexane, m-tetramethyl xylylene diisocyanate, p-tetramethyl xylylene diisocyanate, 1,4-xylylene diisocyanate, 1,3-xylylene diisocyanate, methane-bis-(4-phenyl isocyanate), toluene diisocyanate, naphthalene diisocyanate, and mixtures thereof.

7. A polyurethane prepolymer of claim 1 or 2, wherein component b) is obtained by reacting a polyol or an epoxy terminated resin with a carboxylic acid containing compound selected from a drying oil(s), and mixtures thereof, a fatty acid(s), and mixtures thereof.

8. A polyurethane prepolymer of claim 7, wherein said polyol contains an average alcohol functionality of at least 3 hydroxyl groups per molecule, said drying oil is selected from linseed oil, poppyseed oil, tung oil, dehydrated castor oil, safflower oil, sunflower oil, soybean oil, oiticica oil, perilla oil, walnut oil, tall oil, sardine oil, and herring oil, and said fatty acid is selected from linoleic acid, linolenic acid, oleic acid, oleosteric acid, eleosteric acid, licanic acid, arachidonic acid, ricinoleic acid, ricinoic acid, and palmitoleic acid, and positional isomers thereof.

9. A polyurethane prepolymer of claim 1 or 2, wherein component c) contains a pendant anionic functional group(s) selected from ,sulfonic acid and salts thereof, carboxylic acid and salts thereof, phosphonic acid and salts thereof; and mixtures thereof.

10. A polyurethane prepolymer of claim 9, wherein component c) contains pendant carboxylic acid groups and is the reaction product of:
i) a polyol selected from polyester polyols, polyether polyols, polycarbonate polyols, polyetherester polyols, polyacrylic polyols, and polyolefinic polyols; and
ii) a dianhydride.

11. A polyurethane prepolymer of claim 9, wherein said polymeric polyol contains pendant carboxylic acid groups and is the esterification reaction product of:
i) a first component selected from a polycarboxylic acid, a polyol, and mixtures thereof; and
ii) a second component having at least two unhindered functional groups selected from carboxylic acid, hydroxyl, primary amine, secondary amine and thiol groups, and at least on hindered carboxylic acid group.

12. A polyurethane prepolymer of claim 9, wherein said polymeric polyol contains pendant carboxylic acid groups and is the reaction product of:
i) at least one polyol having a hydroxyl group selected from a terminal primary hydroxyl group, a terminal secondary hydroxyl group, a terminal tertiary hydroxyl group and mixtures thereof; and
ii) an anhydride selected from an aromatic anhydride, a non-aromatic anhydride, and mixtures thereof.

13. A polyurethane prepolymer of claim 1 or 2, wherein component d) is selected from esters of (meth)acrylic acid with aliphatic, aromatic, and polyether polyhydric alcohols; esters of (meth)acrylic acid with olefinically unsaturated alcohols; multifunctional allyl ethers; reaction products of pentaerythritol triallyl ether with saturated or unsaturated mono-, di- and tri-carboxylic acids containing 2 to 22 carbon atoms; and reaction products of trimethylolpropane diallyl ether with saturated or unsaturated mono-, di- and tri-carboxylic acids containing 2 to 22 carbon atoms.

14. A polyurethane prepolymer of claim 13, wherein component d) is selected from 1,4- butanediol di(meth)acrylate, 1,6-hexanediol di(meth)acrylate, 1,12- dodecyl diacrylate, dipropylene or tripropylene glycol di(meth) acrylate, triethylene glycol di(meth)acrylate, polyethylene glycol di(meth)acrylate; vinyl (meth)acrylate, allyl (meth)acrylate and dicyclopentadienyl acrylate; glycerol tri(meth)acrylate, trimethylolpropane tri(meth)acrylate, trimethylolpropane di(meth)acrylate, pentaerythritol tri(meth)acrylate, pentaerythritol tetra(meth)acrylate, ethoxylated trimethylolpropane tri(meth)acrylate, propoxylated glyceryl tri(meth)acrylate, propoxylated trimethylolpropane tri(meth)acrylate; diallyl phthalate, diallyl carbonate, diallyl ether, diethyleneglycol diallyl ether, triethylene glycol diallyl, ether, tetraethylene glycol diallyl ether, propylene glycol diallyl ether, propyleneglycol triallyl ether, neopentylglycol diallyl ether, 1,1,1-trimethylolpropane diallyl ether, 1,2,3-triallyloxypropane, trimethylolpropane triallyl ether, pentaerythritol triallyl ether, allyl sucrose, triallylcyanurate, triallyl isocyanurate, allyl diglycol carbonates, diallyl maleate, diallyl fumarate, triallyl trimellitate, diallyl amine, triallylamine, triallyl citrate; and mixtures thereof.

15. A polyurethane prepolymer of claim 1 or 2, wherein said mixture comprises a plasticizer.

16. A polyurethane prepolymer composition of claim 2, wherein component e) is selected from dihydroxy ketones, Michael-addition adducts of diacetoneacrylamide with diamine or alkanolamine, adducts of diepoxides with ketocarboxylic acids, and ketocarboxylates.

17. A polyurethane prepolymer composition of claim 16, wherein said diepoxide is selected from diglycidyl ethers of bisphenols wherein said bisphenol is selected from 2,2-bis-(4-hydroxyphenyl)-propane, 4,4'-dihydroxybenzophenone, 1,1-bis-(4-hydroxyphenyl)-ethane, 1,1-bis-(4-hydroxyphenyl)-isobutane, 2,2-bis-(4-hydroxy-tert-butylphenyl)-propane, bis-(4-hydroxynaphthyl)-methane and 1,5-dihydroxynaphthalene; diglycidyl ethers of dihydric alcohols wherein said alcohol is selected from ethylene glycol, diethylene glycol, triethylene glycol, 1,2-propylene glycol, 1,3-propanediol, 1,5-pentanediol, 1,6-hexanediol and 2,2-bis-(4-hydroxycyclohexyl)-propane; diglycidyl ethers of dicarboxylic acids wherein said acid is selected from oxalic acid, succinic acid, glutaric acid, terephthalic acid, 2,6-naphthalenedicarboxylic acid and dimerized linolenic acid.

18. A polyurethane prepolymer composition of claim 2, wherein component f) is selected from a compound represented by the formula:
(OH)ₓQ(COOH)_{y}
wherein Q is a straight or branched hydrocarbon radical having 1 to 12 carbon atoms, and x and y are 1 to 3.

19. A polyurethane prepolymer composition of claim 18, wherein component f) is selected from citric acid, dimethylolpropanoic acid dimethylol butanoic acid, glycolic acid, lactic acid, malic acid, dihydroxymalic acid, tartaric acid, hydroxypivalic acid, and mixtures thereof.

20. A polyurethane prepolymer composition of claim 2, wherein component g) is selected from an monoalcohol or diol compound containing a pendant polyalkyleneoxide side chain.

21. A polyurethane prepolymer composition of claim 20, wherein said polyalkyleneoxide side chain comprises alkylene oxide units selected from ethyleneoxide, propyleneoxide, butyleneoxide, and mixtures thereof.

22. A polyurethane prepolymer composition of claim 1, 2, 16, or 17 wherein said prepolymer is neutralized with a neutralization agent.

23. A polyurethane prepolymer composition of claim 22, wherein said neutralization agent is selected from tertiary amines, metal hydroxides, ammonium hydroxide, and phosphines.

24. A polyurethane prepolymer composition of claim 23, wherein said prepolymer is dispersed in water.

25. A polyurethane prepolymer composition of claim 1 or 2, wherein said prepolymer is dispersed in water containing a neutralizing agent.

26. A polyurethane composition wherein the neutralized prepolymer of claim 22 is chain extended with a chain extender.

27. A polyurethane composition of claim 26, wherein said chain extender is selected from water, organic polyamines, polyalcohols, ureas, and mixtures thereof.

28. A polyurethane composition of claim 26 further comprising a crosslinking agent.

29. A polyurethane composition of claim 28, wherein said crosslinking agent is selected from a polyamine and a polyhydrazide (and polyhydrazones thereof).

30. A polyurethane composition of claim 29, wherein said crosslinking agent is selected from oxalic acid dihydrazide, malonic acid dihydrazide, succinic acid dihydrazide, adipic acid dihydrazide, sebacic acid dihydrazide, phthalic acid dihydrazide, terephthalic acid dihydrazide, naphthalenedicarboxylic acid dihydrazide, 1,2-cyclohexane dicarboxylic acid dihydrazide, 1,3-cyclohexane dicarboxylic acid dihydrazide, 1,4-cyclohexane dicarboxylic acid dihydrazide, azelaic acid dihydrazide(s); carbonic acid hydrazide(s), bis-semicarbazides, trihydrazides, dihydrazinoalkones and dihydrazides of aromatic hydrocarbons.

31. A polyurethane composition of claim 28 further comprising a drier salt(s), surfactant(s), stabilizer(s), defoamer(s), thickener(s), leveling agent(s), antimicrobial agent(s), antioxidant(s), UV absorber(s), fire retardant(s), pigment(s), dye(s), and mixtures thereof.

32. A coating composition comprising the polyurethane composition of claim 27.

## Patentansprüche

1. Wasserdispergierbare Zusammensetzung eines selbstvernetzungsfähigen, isocyanatterminierten Polyurethan-Prepolymers, umgesetzt aus einem Gemisch, das Folgendes umfasst:
a) eine organische Polyisocyanatkomponente;
b) eine isocyanatreaktive ölmodifizierte Polyolkomponente mit olefinischer Unsättigung;
c) eine isocyanatreaktive polymere Polyolkomponente, die seitenständige anionische funktionelle Gruppen enthält; und
d) eine reaktive Verdünnungskomponente, die wenigstens zwei ethylenisch ungesättigte Doppelbindungen enthält.

2. Polyurethan-Prepolymer gemäß Anspruch 1, wobei das Gemisch eine isocyanatreaktive Komponente umfasst, die aus e) einer carbonylfunktionellen Komponente, f) einer anionisch funktionellen Alkoholkomponente und Salzen davon, g) einer Alkoholkomponente, die eine Polyalkylenoxid-Seitenkette enthält, und Gemischen davon ausgewählt ist.

3. Polyurethan-Prepolymer gemäß Anspruch 2, wobei das Gemisch eine Polyolkomponente umfasst, die aus einem Polyesterpolyol, einem Polyetherpolyol, einem Polycarbonatpolyol, einem niedermolekularen Diol und Gemischen davon ausgewählt ist.

4. Polyurethan-Prepolymer gemäß Anspruch 2, wobei das Gemisch eine langkettige Aminkomponente umfasst, die aus einem Polyesteramid, einem Polyamid und Gemischen davon ausgewählt ist.

5. Polyurethan-Prepolymer gemäß Anspruch 1 oder 2, wobei Komponente a) aus aliphatischen, cycloaliphatischen, araliphatischen, aromatischen Polyisocyanaten und Gemischen davon, die 2 oder mehr Isocyanatgruppen enthalten, ausgewählt ist.

6. Polyurethan-Prepolymer gemäß Anspruch 5, wobei Komponente a) aus Hexamethylen-1,6-diisocyanat, 1,12-Dodecandiisocyanat, 2,2,4-Trimethylhexamethylendiisocyanat, 2,4,4-Trimethylhexamethylendiisocyanat, 2-Methyl-1,5-pentamethylendiisocyanat, Dicyclohexylmethandiisocyanat, Isophorondiisocyanat, 1,4-Cyclohexandiisocyanat, 1,3-Bis(isocyanatomethyl)cyclohexan, m-Tetramethylxylylendiisocyanat, p-Tetramethylxylylendiisocyanat, 1,4-Xylylendiisocyanat, 1,3-Xylylendiisocyanat, Methanbis(4-phenylisocyanat), Toluoldiisocyanat, Naphthalindiisocyanat und Gemischen davon ausgewählt ist.

7. Polyurethan-Prepolymer gemäß Anspruch 1 oder 2, wobei Komponente b) erhalten wird, indem man ein Polyol oder ein epoxyterminiertes Harz mit einer carbonsäurehaltigen Verbindung umsetzt, die aus einem oder mehreren trocknenden Ölen und Gemischen davon, einer oder mehreren Fettsäuren und Gemischen davon ausgewählt ist.

8. Polyurethan-Prepolymer gemäß Anspruch 7, wobei das Polyol eine mittlere Alkoholfunktionalität von wenigstens 3 Hydroxygruppen pro Molekül enthält, das trocknende Öl aus Leinöl, Mohnöl, Tungöl, dehydratisiertem Ricinusöl, Distelöl, Sonnenblumenöl, Sojaöl, Oiticica-Öl, Perillaöl, Walnussöl, Tallöl, Sardinenöl und Heringsöl ausgewählt ist und die Fettsäure aus Linolsäure, Linolensäure, Ölsäure, Oleosterinsäure, Eleosterinsäure, Licansäure, Arachidonsäure, Ricinolsäure, Ricinsäure und Palmitolsäure und Stellungsisomeren davon ausgewählt ist.

9. Polyurethan-Prepolymer gemäß Anspruch 1 oder 2, wobei Komponente c) eine oder mehrere seitenständige anionische funktionelle Gruppen enthält, die aus Sulfonsäure und Salzen davon, Carbonsäure und Salzen davon, Phosphonsäure und Salzen davon und Gemischen davon ausgewählt ist.

10. Polyurethan-Prepolymer gemäß Anspruch 9, wobei Komponente c) seitenständige Carbonsäuregruppen enthält und das Reaktionsprodukt ist von:
i) einem Polyol, das aus Polyesterpolyolen, Polyetherpolyolen, Polycarbonatpolyolen, Polyetheresterpolyolen, Polyacrylpolyolen und polyolefinischen Polyolen ausgewählt ist; und
ii) einem Dianhydrid.

11. Polyurethan-Prepolymer gemäß Anspruch 9, wobei das polymere Polyol seitenständige Carbonsäuregruppen enthält und das Produkt einer Veresterungsreaktion ist von:
i) einer ersten Komponente, die aus einer Polycarbonsäure, einem Polyol und Gemischen davon ausgewählt ist; und
ii) einer zweiten Komponente, die wenigstens zwei ungehinderte funktionelle Gruppen aufweist, die aus Carbonsäure-, Hydroxy-, primären Amin-, sekundären Amin- und Thiolgruppen sowie wenigstens einer gehinderten Carbonsäuregruppe ausgewählt sind.

12. Polyurethan-Prepolymer gemäß Anspruch 9, wobei das polymere Polyol seitenständige Carbonsäuregruppen enthält und das Reaktionsprodukt ist von:
i) wenigstens einem Polyol, das eine Hydroxygruppe aufweist, die aus einer terminalen primären Hydroxygruppe, einer terminalen sekundären Hydroxygruppe, einer terminalen tertiären Hydroxygruppe und Gemischen davon ausgewählt ist; und
ii) einem Anhydrid, das aus einem aromatischen Anhydrid, einem nichtaromatischen Anhydrid und Gemischen davon ausgewählt ist.

13. Polyurethan-Prepolymer gemäß Anspruch 1 oder 2, wobei Komponente d) ausgewählt ist aus Estern von (Meth)acrylsäure mit aliphatischen, aromatischen Alkoholen und mehrwertigen Polyetheralkoholen, Estern von (Meth)acrylsäure mit olefinisch ungesättigten Alkoholen, multifunktionellen Allylethern, Reaktionsprodukten von Pentaerythrittriallylether mit gesättigten oder ungesättigten Mono-, Di- und Tricarbonsäuren, die 2 bis 22 Kohlenstoffatome enthalten, und Reaktionsprodukten von Trimethylolpropandiallylether mit gesättigten oder ungesättigten Mono-, Di- und Tricarbonsäuren, die 2 bis 22 Kohlenstoffatome enthalten.

14. Polyurethan-Prepolymer gemäß Anspruch 13, wobei Komponente d) ausgewählt ist aus 1,4-Butandioldi(meth)acrylat, 1,6-Hexandioldi(meth)-acrylat, 1,12-Dodecyldiacrylat, Dipropylen- oder Tripropylenglycoldi-(meth)acrylat, Triethylenglycoldi(meth)acrylat, Polyethylenglycoldi(meth)-acrylat; Vinyl(meth)acrylat, Allyl(meth)acrylat und Dicyclopentadienylacrylat; Glycerintri(meth)acrylat, Trimethylolpropantri(meth)acrylat, Trimethylolpropandi(meth)acrylat, Pentaerythrittri(meth)acrylat, Pentaerythrittetra(meth)acrylat, ethoxyliertem Trimethylolpropantri(meth)-acrylat, propoxyliertem Glyceryltri(meth)acrylat, propoxyliertem Trimethylolpropantri(meth)acrylat; Diallylphthalat, Diallylcarbonat, Diallylether, Diethylenglycoldiallylether, Triethylenglycoldiallylether, Tetraethylenglycoldiallylether, Propylenglycoldiallylether, Propylenglycoltriallylether, Neopentylglycoldiallylether, 1,1,1-Trimethylolpropandiallylether, 1,2,3-Triallyloxypropan, Trimethylolpropantriallylether, Pentaerythrittriallylether, Allylsaccharose, Triallylcyanurat, Triallylisocyanurat, Allyldiglycolcarbonaten, Diallylmaleat, Diallylfumarat, Triallyltrimellitat, Diallylamin, Triallylamin, Triallylcitrat und Gemischen davon.

15. Polyurethan-Prepolymer gemäß Anspruch 1 oder 2, wobei das Gemisch einen Weichmacher umfasst.

16. Polyurethan-Prepolymerzusammensetzung gemäß Anspruch 2, wobei Komponente e) aus Dihydroxyketonen, Addukten der Michael-Addition von Diacetonacrylamid mit Diamin oder Alkanolamin, Addukten von Diepoxiden mit Ketocarbonsäuren und Ketocarboxylaten ausgewählt ist.

17. Polyurethan-Prepolymerzusammensetzung gemäß Anspruch 16, wobei das Diepoxid ausgewählt ist aus Diglycidylethern von Bisphenolen, wobei das Bisphenol aus 2,2-Bis(4-hydroxyphenyl)propan, 4,4'-Dihydroxybenzophenon, 1,1-Bis(4-hydroxyphenyl)ethan, 1,1-Bis(4-hydroxyphenyl)isobutan, 2,2-Bis(4-hydroxy-tert-butylphenyl)propan, Bis(4-hydroxynaphthyl)-methan und 1,5-Dihydroxynaphthalin ausgewählt ist; Diglycidylethern von zweiwertigen Alkoholen, wobei der Alkohol aus Ethylenglycol, Diethylenglycol, Triethylenglycol, 1,2-Propylenglycol, 1,3-Propandiol, 1,5-Pentandiol, 1,6-Hexandiol und 2,2-Bis(4-hydroxycyclohexyl)propan ausgewählt ist; Diglycidylethern von Dicarbonsäuren, wobei die Säure aus Oxalsäure, Bernsteinsäure, Glutarsäure, Terephthalsäure, 2,6-Naphthalindicarbonsäure und dimerisierter Linolensäure ausgewählt ist.

18. Polyurethan-Prepolymerzusammensetzung gemäß Anspruch 2, wobei Komponente f) aus einer Verbindung ausgewählt ist, die durch die Formel
(OH)ₓQ(COOH)_{y}
dargestellt wird, wobei Q ein geradkettiger oder verzweigter Kohlenwasserstoffrest mit 1 bis 12 Kohlenstoffatomen ist und x und y = 1 bis 3 sind.

19. Polyurethan-Prepolymerzusammensetzung gemäß Anspruch 18, wobei Komponente f) aus Zitronensäure, Dimethylolpropansäure, Dimethylolbutansäure, Glycolsäure, Milchsäure, Äpfelsäure, Dihydroxyäpfelsäure, Weinsäure, Hydroxypivalinsäure und Gemischen davon ausgewählt ist.

20. Polyurethan-Prepolymerzusammensetzung gemäß Anspruch 2, wobei Komponente g) aus einer Monoalkohol- oder Diolverbindung, die eine seitenständige Polyalkylenoxid-Seitenkette enthält, ausgewählt ist.

21. Polyurethan-Prepolymerzusammensetzung gemäß Anspruch 20, wobei die Polyalkylenoxid-Seitenkette Alkylenoxid-Einheiten umfasst, die aus Ethylenoxid, Propylenoxid, Butylenoxid und Gemischen davon ausgewählt sind.

22. Polyurethan-Prepolymerzusammensetzung gemäß Anspruch 1, 2, 16 oder 17, wobei das Prepolymer mit einem Neutralisationsmittel neutralisiert ist.

23. Polyurethan-Prepolymerzusammensetzung gemäß Anspruch 22, wobei das Neutralisationsmittel aus tertiären Aminen, Metallhydroxiden, Ammoniumhydroxid und Phosphinen ausgewählt ist.

24. Polyurethan-Prepolymerzusammensetzung gemäß Anspruch 23, wobei das Prepolymer in Wasser dispergiert ist.

25. Polyurethan-Prepolymerzusammensetzung gemäß Anspruch 1 oder 2, wobei das Prepolymer in Wasser dispergiert ist, das ein Neutralisationsmittel enthält.

26. Polyurethanzusammensetzung, wobei das neutralisierte Prepolymer gemäß Anspruch 22 mit einem Kettenverlängerer kettenverlängert ist.

27. Polyurethanzusammensetzung gemäß Anspruch 26, wobei der Kettenverlängerer aus Wasser, organischen Polyaminen, Polyalkoholen, Harnstoffen und Gemischen davon ausgewählt ist.

28. Polyurethanzusammensetzung gemäß Anspruch 26, die weiterhin ein Vernetzungsmittel umfasst.

29. Polyurethanzusammensetzung gemäß Anspruch 28, wobei das Vernetzungsmittel aus einem Polyamin und einem Polyhydrazid (und Polyhydrazonen davon) ausgewählt ist.

30. Polyurethanzusammensetzung gemäß Anspruch 29, wobei das Vernetzungsmittel aus Oxalsäuredihydrazid, Malonsäuredihydrazid, Bernsteinsäuredihydrazid, Adipinsäuredihydrazid, Sebacinsäuredihydrazid, Phthalsäuredihydrazid, Terephthalsäuredihydrazid, Naphthalindicarbonsäuredihydrazid, 1,2-Cyclohexandicarbonsäuredihydrazid, 1,3-Cyclohexandicarbonsäuredihydrazid, 1,4-Cyclohexandicarbonsäuredihydrazid, Azelainsäuredihydrazid(en), Kohlensäurehydrazid(en), Bissemicarbaziden, Trihydraziden, Dihydrazinoalkonen und Dihydraziden von aromatischen Kohlenwasserstoffen ausgewählt ist.

31. Polyurethanzusammensetzung gemäß Anspruch 28, die weiterhin ein oder mehrere Trocknungssalze, Tenside, Stabilisatoren, Entschäumer, Verdickungsmittel, Verlaufmittel, antimikrobielle Mittel, Antioxidantien, UV-Absorber, Flammhemmer, Pigmente, Farbstoffe und Gemische davon umfasst.

32. Beschichtungszusammensetzung, die die Polyurethanzusammensetzung gemäß Anspruch 27 umfasst.

## Revendications

1. Composition autoréticulable, dispersible dans l'eau, de prépolymère de polyuréthane terminé par des groupes isocyanate formé par la réaction d'un mélange comprenant:
a) un composant polyisocyanate organique;
b) un composant polyol modifié par une huile réactive avec les isocyanates, comportant une insaturation oléfinique;
c) un composant polyol polymérique réactif avec les isocyanates, contenant des groupes fonctionnels anioniques pendants; et
d) un composant diluant réactif contenant au moins deux liaisons doubles éthyléniquement insaturées.

2. Prépolymère de polyuréthane selon la revendication 1, dans lequel ledit mélange comprend un composant réactif avec les isocyanates choisi parmi e) un composant fonctionnel carbonyle; f) un composant alcool fonction anionique et ses sels; g) composant alcool contenant une chaîne latérale oxyde de polyalkylène; et des mélanges de ceux-ci.

3. Prépolymère de polyuréthane selon la revendication 2, dans lequel ledit mélange comprend un composant polyol choisi parmi un polyol de polyester, un polyol de polyéther, un polyol de polycarbonate, un diol à bas poids moléculaire et des mélanges de ceux-ci.

4. Prépolymère de polyuréthane selon la revendication 2, dans lequel ledit mélange comprend un composant amine à longue chaîne choisi parmi un amide de polyester, un polyamide et des mélanges de ceux-ci.

5. Prépolymère de polyuréthane selon l'une des revendications 1 ou 2, dans lequel le composant a) est choisi parmi les polyisocyanates aliphatiques, cycloaliphatiques, araliphatiques et aromatiques et des mélanges de ceux-ci contenant au moins 2 groupes isocyanate.

6. Prépolymère de polyuréthane selon la revendication 5, dans lequel le composant a) est choisi parmi le diisocyanate de 1,6-hexaméthylène, le diisocyanate de 1,12-dodécane, le diisocyanate de 2,2,4-triméthylhexaméthylène, le diisocyanate de 2,4,4-triméthylhexaméthylène, le diisocyanate de 2-méthyl-1,5-pentaméthylène, le diisocyanate de dicyclohexylméthane, le diisocyanate d'isophorone, le diisocyanate de 1,4-cyclohexane, le 1,3-bis(isocyanatométhyl)cyclohexane, le diisocyanate de m-tétraméthylxylylène, le diisocyanate de p-tétraméthylxylylène, le diisocyanate de 1,4-xylylène, le diisocyanate de 1,3-xylylène, le bis-(4-phénylisocyanate) de méthylène, le diisocyanate de toluène, le diisocyanate de naphtalène et des mélanges de ceux-ci.

7. Prépolymère de polyuréthane selon l'une des revendications 1 ou 2, dans lequel le composant b) est obtenu en faisant réagir un polyol ou une résine terminée par des groupes époxy avec un composé contenant un acide carboxylique choisi parmi une ou plusieurs huiles siccatives et des mélanges de ceux-ci, un ou plusieurs acides gras et des mélanges de ceux-ci.

8. Prépolymère de polyuréthane selon la revendication 7, dans lequel ledit polyol contient une fonctionnalité alcool moyenne d'au moins 3 groupes hydroxyle par molécule, ladite huile siccative est choisie parmi l'huile de lin, l'huile d'oeittette (de pavot), l'huile de bois de Chine, l'huile de ricin déshydratée, l'huile de carthame, l'huile de tournesol, l'huile de soja, l'huile d'oïticica, l'huile de périlla, l'huile de noix, l'huile de tall, l'huile de sardines et l'huile de hareng, et ledit acide gras est choisi parmi l'acide linoléique, l'acide linolénique, l'acide oléique, l'acide oléostérique, l'acide éléostérique, l'acide licanique, l'acide arachidonique, l'acide ricinoléique, l'acide ricinique et l'acide palmitoléique et des isomères de position de ceux-ci.

9. Prépolymère de polyuréthane selon l'une des revendications 1 ou 2, dans lequel le composant c) contient un ou plusieurs groupes fonctionnels anioniques pendants choisis parmi acide sulfonique et ses sels, acide carboxylique et ses sels, acide phosphonique et ses sels, et des mélanges de ceux-ci.

10. Prépolymère de polyuréthane selon la revendication 9, dans lequel le composant c) contient des groupes acide carboxylique pendants et est le produit de réaction de:
i) un polyol choisi parmi les polyols de polyester, les polyols de polyéther, les polyols de polycarbonate, les polyols de polyétherester, les polyols polyacryliques et les polyols polyoléfiniques; et
ii) un dianhydride.

11. Prépolymère de polyuréthane selon la revendication 9, dans lequel le polyol polymérique contient des groupes acide carboxylique pendants et est le produit d'esterification de:
i) un premier composant choisi parmi un acide polycarboxylique, un polyol et des mélanges de ceux-ci;
ii) un deuxième composant comprenant au moins deux groupes fonctionnels non encombrés choisis parmi les groupes acide carboxylique, hydroxyle, amine primaire, amine secondaire et thiol, et au moins un groupe acide carboxylique encombré.

12. Prépolymère de polyuréthane selon la revendication 9, dans lequel ledit polyol polymérique contient des groupes acide carboxylique pendants et est le produit de réaction de:
i) au moins un polyol portant un groupe hydroxyle choisi parmi un groupe hydroxyle primaire terminal, un groupe hydroxyle secondaire terminal, un groupe hydroxyle tertiaire terminal et des mélanges de ceux-ci; et
ii) un anhydride choisi parmi un anhydride aromatique, un anhydride non-aromatique et des mélanges de ceux-ci.

13. Prépolymère de polyuréthane selon l'une des revendications 1 ou 2, dans lequel le composant d) est choisi parmi des esters de l'acide (méth)acrylique avec des alcools aliphatiques, aromatiques et polyéther polyhydriques; des esters de l'acide (méth)acrylique avec des alcools oléfiniquement insaturés; des éthers allyliques multifonctionnels; des produits de réaction de l'éther triallylique du pentaérythritol avec des acides mono-, di- et tricarboxyliques saturés ou insaturés contenant de 2 à 22 atomes de carbone; et des produits de réaction de l'éther diallylique de triméthylolpropane avec des acides mono-, di- et tricarboxyliques saturés ou insaturés contenant de 2 à 22 atomes de carbone.

14. Prépolymère de polyuréthane selon la revendication 13, dans lequel le composant d) est choisi parmi le di(méth)acrylate de 1,4-butanediol, le di(méth)acrylate de 1,6-hexanediol, le diacrylate de 1,12-dodécyle, le di(méth)acrylate de dipropylène ou tripropylène glycol, le di(méth)acrylate de triéthylène glycol, le di(méth)acrylate de polyéthylène glycol, le (méth)acrylate de vinyle, le (méth)acrylate d'allyle et l'acrylate de dicyclopentadiényle; le tri(méth)acrylate de glycérol, le tri(méth)acrylate de triméthylolpropane, le di(méth)acrylate de triméthylolpropane, le tri(méth)-acrylate de pentaérythritol, le tétra(méth)acrylate de pentaérythritol, le tri(méth)acrylate de triméthylolpropane éthoxylé, le tri(méth)acrylate de glycérol propoxylé, le tri(méth)acrylate de triméthylolpropane propoxylé; le phtalate de diallyle, le carbonate de diallyle, l'éther diallylique, l'éther diallylique de diéthylène glycol, l'éther diallylique de triéthylène glycol, l'éther diallylique de tétraéthylène glycol, l'éther diallylique de propylène glycol, l'éther triallylique de propylène glycol, l'éther diallylique de néopentyl glycol, l'éther diallylique de 1,1,1-triméthylolpropane, le 1,2,3-triallyloxypropane, l'éther triallylique de triméthylolpropane, l'éther triallylique de pentaérythritol, l'allylsaccharose, le cyanurate de triallyle, l'isocyanurate de triallyle, les carbonates d'allyldiglycol, le maléate de diallyle, le fumarate de diallyle, le trimellitate de triallyle, la diallylamine, la triallylamine, le citrate de triallyle; et des mélanges de ceux-ci.

15. Prépolymère de polyuréthane selon l'une des revendications 1 ou 2, dans lequel ledit mélange comprend un plastifiant.

16. Composition de prépolymère de polyuréthane selon la revendication 2, dans laquelle le composant e) est choisi parmi des dihydroxycétones, des produits d'addition de Michael de diacétoneacrylamide avec une diamine ou alkanolamine, des adduits de diépoxydes avec des acides cétocarboxyliques, et des cétocarboxylates.

17. Composition de prépolymère de polyuréthane selon la revendication 16, dans laquelle ledit diépoxyde est choisi parmi des éthers diglycidyliques de bisphénols, dans lesquels ledit bisphénol est choisi parmi le 2,2-bis(4-hydroxyphényl)propane, le 4,4'-dihydroxybenzophénone, le 1,1-bis(4-hydroxyphényl)éthane, le 1,1-bis(4-hydroxyphényl)isobutane, le 2,2-bis(4-hydroxy-tert-butylphényl)propane, le bis(4-hydroxynaphtyl)méthane et le 1,5-dihydroxynaphtalène; des éthers diglycidyliques d'alcools dihydriques, dans lesquels ledit alcool est choisi parmi l'éthylène glycol, le diéthylène glycol, le triéthylène glycol, le 1,2-propylène glycol, le 1,3-propanediol, le 1,5-pentanediol, le 1,6-hexanediol et le 2,2-bis(4-hydroxycyclohexyl)propane; des éthers diglycidyliques d'acides dicarboxyliques, dans lesquels ledit acide est choisi parmi l'acide oxalique, l'acide succinique, l'acide glutarique, l'acide téréphtalique, l'acide 2,6-naphtalènedicarboxylique et l'acide linolénique dimérisé.

18. Composition de prépolymère de polyuréthane selon la revendication 2, dans laquelle le composant f) est choisi parmi un composé représenté par la formule:
(OH)ₓQ(COOH)_{y},
où Q est un radical hydrocarboné linéaire ou ramifié comprenant de 1 à 12 atomes de carbone, et x et y valent de 1 à 3.

19. Composition de prépolymère de polyuréthane selon la revendication 18, dans laquelle le composant f) est choisi parmi l'acide citrique, l'acide diméthylolpropanoïque, l'acide diméthylolbutanoïque, l'acide glycolique, l'acide lactique, l'acide malique, l'acide dihydroxymalique, l'acide tartarique, l'acide hydroxypivalique et des mélanges de ceux-ci.

20. Composition de prépolymère de polyuréthane selon la revendication 2, dans laquelle le composant g) est choisi parmi un composé monoalcool ou diol contenant une chaîne latérale oxyde de polyalkylène pendante.

21. Composition de prépolymère de polyuréthane selon la revendication 20, dans laquelle ladite chaîne latérale oxyde de polyalkylène comprend des motifs oxyde d'alkylène choisis parmi l'oxyde d'éthylène, l'oxyde de propylène, l'oxyde de butylène et des mélanges de ceux-ci.

22. Composition de prépolymère de polyuréthane selon les revendications 1, 2, 16 ou 17, dans laquelle ledit prépolymère est neutralisé avec un agent neutralisant.

23. Composition de prépolymère de polyuréthane selon la revendication 22, dans laquelle ledit agent neutralisant est choisi parmi des amines tertiaires, des hydroxydes métalliques, l'hydroxyde d'ammonium et des phosphines.

24. Composition de prépolymère de polyuréthane selon la revendication 23, dans laquelle ledit prépolymère est dispersé dans de l'eau.

25. Composition de prépolymère de polyuréthane selon l'une des revendications 1 ou 2, dans laquelle ledit prépolymère est dispersé dans de l'eau contenant un agent neutralisant.

26. Composition de polyuréthane, dans laquelle le prépolymère neutralisé de la revendication 22 est soumis à un allongement de chaîne avec un allongeur de chaîne.

27. Composition de polyuréthane selon la revendication 26, dans laquelle ledit allongeur de chaîne est choisi parmi l'eau, des polyamines organiques, des polyalcools, des urées et des mélanges de ceux-ci.

28. Composition de polyuréthane selon la revendication 26, comprenant en outre un agent de réticulation.

29. Composition de polyuréthane selon la revendication 28, dans laquelle ledit agent de réticulation est choisi parmi une polyamine et un polyhydrazide (et des polyhydrazones de ceux-ci).

30. Composition de polyuréthane selon la revendication 29, dans laquelle ledit agent de réticulation est choisi parmi le dihydrazide d'acide oxalique, le dihydrazide d'acide malonique, le dihydrazide d'acide succinique, le dihydrazide d'acide adipique, le dihydrazide d'acide sébacique, le dihydrazide d'acide phtalique, le dihydrazide d'acide téréphtalique, le dihydrazide d'acide naphtalènedicarboxylique, le dihydrazide d'acide 1,2-cyclohexanedicarboxylique, le dihydrazide d'acide 1,3-cyclohexanedicarboxylique, le dihydrazide d'acide 1,4-cyclohexanedicarboxylique, le ou les dihydrazides d'acide azélaïque, le ou les dihydrazides d'acide carbonique, les bis-semicarbazides, trihydrazides, dihydrazinoalkones et dihydrazides d'hydrocarbures aromatiques.

31. Composition de polyuréthane selon la revendication 28, comprenant en outre un ou plusieurs sels dessiccateurs, un ou plusieurs tensioactifs, un ou plusieurs stabilisants, un ou plusieurs antimoussants, un ou plusieurs épaississants, un ou plusieurs agents d'étalement, un ou plusieurs agents antimicrobiens, un ou plusieurs antioxydants, un ou plusieurs absorbeurs UV, un ou plusieurs agents ignifuges, un ou plusieurs pigments, un ou plusieurs colorants et des mélanges de ceux-ci.

32. Composition de revêtement comprenant la composition de polyuréthane selon la revendication 27.
